# EUROPEAN PATENT APPLICATION

(11) **EP 4 746 548 A1**
(43) Date of publication of application: **20.05.2026**
(21) Application number: 24850789.9
(22) Date of filing: 23.07.2024
(51) Int. Cl.: H04W 72/04

(54) **COMMUNICATION METHOD AND COMMUNICATION APPARATUS**

(30) Priority: 10.08.2023 CN 202311008409
(71) Applicant: Huawei Technologies Co., Ltd., Shenzhen, Guangdong 518129 (CN)
(72) Inventor: JIAO, Shurong, Shenzhen, Guangdong 518129 (CN); LI, Jun, Shenzhen, Guangdong 518129 (CN)
(74) Representative: Pfenning, Meinig & Partner mbB
(86) International application number: PCT/CN2024/106983
(87) International publication number: WO 2025/031140

(57) **Abstract**

This application provides a communication method and a communication apparatus. The communication method includes: receiving first information, second information, and third information; and when determining, based on the second information, that the first information indicates valid data transmission, performing collision resolution on the data transmission indicated by the first information and data transmission indicated by the third information. According to the foregoing technical solution, in this application, when there is a collision between transmission directions indicated by different information, a resource waste caused by transmission cancellation after transmission resource allocation can be reduced.

## Description

This application claims priority to Chinese Patent Application No. 202311008409.3, filed with the China National Intellectual Property Administration on August 10, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

With development of communication technologies, in a time division duplex (time division duplex, TDD) system, a single uplink-downlink configuration cannot meet requirements of different services. Therefore, a sub-band full duplex (sub-band full duplex, SBFD) solution is proposed in the industry. To be specific, different uplink-downlink configurations are used for different sub-bands of a same carrier. A specific uplink-downlink transmission direction is determined based on an indication in scheduling information. However, after a plurality of pieces of scheduling information are received and collision resolution is performed on transmission directions, a problem like a resource waste may be caused due to cancellation of sending of a channel that obtains a sending opportunity.

### SUMMARY

This application provides a communication method and a communication apparatus, to reduce a resource waste caused by transmission cancellation after transmission resource allocation when there is a collision between transmission directions indicated by different information.

According to a first aspect, this application provides a communication method. The method is applied to a terminal device or a chip system included in the terminal device, and the method includes: receiving first information, second information, and third information, where the first information indicates to perform data transmission in a first transmission direction on a first time-frequency resource, the second information indicates whether the data transmission indicated by the first information is valid, the third information indicates to perform data transmission in a second transmission direction on a third time-frequency resource, the third time-frequency resource belongs to a first bandwidth part BWP in frequency domain, the first time-frequency resource belongs to the first BWP in frequency domain, the first time-frequency resource and the third time-frequency resource at least partially overlap in time domain, and the first transmission direction is opposite to the second transmission direction; and when determining, based on the second information, that the first information indicates valid data transmission, performing collision resolution on the data transmission indicated by the first information and the data transmission indicated by the third information.

According to the foregoing technical solution, in this application, when there is a collision between transmission directions indicated by different information, a resource waste problem caused by data transmission cancellation after transmission resource allocation can be resolved.

Specifically, before performing the collision resolution on the data transmission in the different transmission directions indicated by the first information and the third information, the terminal device first determines, based on the second information, whether the data transmission indicated by the first information is valid. In this way, the terminal device performs the collision resolution only on the valid data transmission, namely, the data transmission indicated by the first information, and the data transmission that is indicated by the third information and that collides with the transmission direction indicated by the information, so that a quantity of times of performing collision resolution can be reduced. In addition, when there is a collision between transmission directions indicated by different information, a resource waste caused by data transmission cancellation after transmission resource allocation can be avoided.

Optionally, a time-frequency resource (for example, the first time-frequency resource) may be an SBFD symbol or an SBFD slot.

Optionally, the first information may be one of higher layer signaling and downlink control information DCI, the second information may be one of higher layer signaling and downlink control information DCI, and the third information may be one of higher layer signaling and downlink control information DCI. The higher layer signaling includes radio resource control RRC signaling and medium access control-control element MAC-CE signaling.

Optionally, the second information may be uplink cancellation indication information UL CI.

Optionally, a transmission direction includes a signal transmission direction or a configured symbol direction.

It should be understood that, that the first information indicates the valid data transmission may be understood as that a part or all of the data transmission that is indicated by the first information and that is performed on the first time-frequency resource is valid data transmission.

With reference to the first aspect, in some implementations of the first aspect, when the data transmission indicated by the first information is performed on a plurality of physical uplink shared channel PUSCH repetitions, uplink data transmission is performed in the first transmission direction; and when there is no uplink data to be transmitted on the first time-frequency resource, the performing the collision resolution on the data transmission indicated by the first information and the data transmission indicated by the third information includes: performing the collision resolution on the first n PUSCH repetitions in the plurality of PUSCH repetitions and the third time-frequency resource, where n is a positive integer.

In this application, when there is no uplink data to be transmitted, the collision resolution is performed on the first n PUSCH repetitions in the plurality of PUSCH repetitions and the third time-frequency resource, so that the quantity of times of performing collision resolution can be reduced, to reduce the resource waste.

With reference to the first aspect, in some implementations of the first aspect, invalid data transmission is performed on a PUSCH repetition after the first n PUSCH repetitions.

With reference to the first aspect, in some implementations of the first aspect, the performing the collision resolution on the data transmission indicated by the first information and the data transmission indicated by the third information includes: performing the collision resolution on a 1^{st} PUSCH repetition, all PUSCH repetitions in time T, and the third time-frequency resource, where the time T is a period of time starting from a last symbol of the 1^{st} PUSCH repetition in the plurality of PUSCH repetitions, and the time T is predefined in a protocol or preconfigured by a base station.

In this application, when there is no uplink data to be transmitted, the collision resolution is performed on the 1^{st} PUSCH repetition in the plurality of PUSCH repetitions, all the PUSCH repetitions in the time T, and the third time-frequency resource, so that the quantity of times of performing collision resolution can be reduced, to reduce the resource waste.

With reference to the first aspect, in some implementations of the first aspect, invalid data transmission is performed on a PUSCH repetition after the time T.

With reference to the first aspect, in some implementations of the first aspect, the plurality of PUSCH repetitions are consecutive in time domain, or the plurality of PUSCH repetitions are inconsecutive in time domain.

Optionally, the plurality of PUSCH repetitions are of a PUSCH repetition type A, or the plurality of PUSCH repetitions are of a PUSCH repetition type B.

With reference to the first aspect, in some implementations of the first aspect, the plurality of PUSCH repetitions are a plurality of configured grant CG-based PUSCH repetitions, a first parameter corresponding to the data transmission indicated by the first information is configured as off, and the first parameter indicates to perform initial transmission starting from a redundancy version RV0.

It should be understood that when the plurality of PUSCH repetitions are the plurality of configured grant CG-based PUSCH repetitions, the plurality of PUSCH repetitions may be a plurality of PUSCH transmission occasions.

With reference to the first aspect, in some implementations of the first aspect, when the data transmission indicated by the first information is performed on a plurality of configured grant CG-based PUSCH repetitions, uplink data transmission is performed in the first transmission direction; and when there is no uplink data to be transmitted on the first time-frequency resource, if a first parameter corresponding to the data transmission indicated by the first information is configured as on, and the first parameter indicates to perform initial transmission starting from a redundancy version RV0, the performing the collision resolution on the data transmission indicated by the first information and the data transmission indicated by the third information includes: performing, based on an RV sequence, the collision resolution on a PUSCH repetition on which initial data transmission can be performed in the plurality of configured grant CG-based PUSCH repetitions and the third time-frequency resource.

In this application, when the data transmission indicated by the first information is performed on the plurality of configured grant CG-based PUSCH repetitions and there is no uplink data to be transmitted, the collision resolution is performed, based on the RV sequence, on the PUSCH repetition on which the initial data transmission can be performed in the plurality of configured grant CG-based PUSCH repetitions and the third time-frequency resource, so that the quantity of times of performing collision resolution can be reduced, to reduce the resource waste.

With reference to the first aspect, in some implementations of the first aspect, when data transmission is not performed on the PUSCH repetition on which the initial data transmission can be performed in the first time-frequency resource, invalid data transmission is performed on a PUSCH repetition on which initial data transmission cannot be performed in the plurality of configured grant CG-based PUSCH repetitions and that is after the PUSCH repetition on which the initial data transmission can be performed.

With reference to the first aspect, in some implementations of the first aspect, when data transmission is performed on the PUSCH repetition on which the initial data transmission can be performed in the first time-frequency resource, the performing the collision resolution on the data transmission indicated by the first information and the data transmission indicated by the third information includes: performing the collision resolution on a PUSCH repetition on which initial data transmission cannot be performed in the plurality of configured grant CG-based PUSCH repetitions and that is after the PUSCH repetition on which the initial data transmission can be performed and the data transmission indicated by the third information.

With reference to the first aspect, in some implementations of the first aspect, when the first information and the third information are higher layer signaling, the higher layer signaling includes radio resource control RRC signaling and medium access control-control element MAC-CE signaling, and a result of the collision resolution is to perform data transmission based on the indication of the first information, the collision resolution includes:
receiving fourth information, and determining, based on the fourth information, to perform the data transmission based on the indication of the first information; or
determining, according to a preset rule, to perform the data transmission based on the indication of the first information, where the preset rule includes: uplink transmission being prioritized, or downlink transmission being prioritized, or one with a higher data transmission priority in uplink transmission and downlink transmission being prioritized.

According to a second aspect, this application provides a communication method. The method is applied to a network device or a chip system included in the network device, and the method includes: determining first information, second information, and third information, where the first information indicates to perform data transmission in a first transmission direction on a first time-frequency resource, the second information indicates whether the data transmission indicated by the first information is valid, the third information indicates to perform data transmission in a second transmission direction on a third time-frequency resource, the third time-frequency resource belongs to a first bandwidth part BWP in frequency domain, the first time-frequency resource belongs to the first BWP in frequency domain, the first time-frequency resource and the third time-frequency resource at least partially overlap in time domain, and the first transmission direction is opposite to the second transmission direction; when determining, based on the second information, that the first information indicates valid data transmission, performing collision resolution on the data transmission indicated by the first information and the data transmission indicated by the third information; and sending the first information, the second information, and the third information.

With reference to the second aspect, in some implementations of the second aspect, when uplink data transmission is performed in the first transmission direction and a result of the collision resolution is to perform data transmission based on the indication of the first information, power detection is performed on the first time-frequency resource indicated by the first information, where the power detection is used to determine whether a terminal device has performed data transmission.

In this embodiment of this application, the network device may determine, by performing the power detection on the first time-frequency resource indicated by the first information, whether the terminal device has performed the data transmission, to avoid a resource waste when the terminal device has no data to be transmitted.

With reference to the second aspect, in some implementations of the second aspect, the data transmission indicated by the first information is performed on a plurality of physical uplink shared channel PUSCH repetitions, and the performing the power detection on the first time-frequency resource indicated by the first information includes: performing the power detection on the first n PUSCH repetitions in the plurality of PUSCH repetitions, where n is a positive integer.

With reference to the second aspect, in some implementations of the second aspect, when determining that data transmission is not performed on at least one of the first n PUSCH repetitions in the plurality of PUSCH repetitions, the network device stops the power detection on a PUSCH repetition after the first n PUSCH repetitions.

With reference to the second aspect, in some implementations of the second aspect, the data transmission indicated by the first information is performed on a plurality of PUSCH repetitions, and the performing the power detection on the first time-frequency resource indicated by the first information includes: performing the power detection on a 1^{st} PUSCH repetition in the plurality of PUSCH repetitions and all PUSCH repetitions in time T, where the time T is a period of time starting from a last symbol of the 1^{st} PUSCH repetition in the plurality of PUSCH repetitions, and the time T is predefined in a protocol or preconfigured by the network device.

With reference to the second aspect, in some implementations of the second aspect, when it is determined that data transmission is not performed on the 1^{st} PUSCH repetition or at least one of all the PUSCH repetitions in the time T, the network device stops the power detection on a PUSCH repetition after the time T.

With reference to the second aspect, in some implementations of the second aspect, the plurality of PUSCH repetitions are consecutive in time domain, or the plurality of PUSCH repetitions are inconsecutive in time domain.

With reference to the second aspect, in some implementations of the second aspect, the plurality of PUSCH repetitions are a plurality of configured grant CG-based PUSCH repetitions, a first parameter corresponding to the data transmission indicated by the first information is configured as off, and the first parameter indicates to perform initial transmission starting from a redundancy version RV0.

With reference to the second aspect, in some implementations of the second aspect, when the data transmission indicated by the first information is performed on a plurality of configured grant CG-based PUSCH repetitions, if a first parameter corresponding to the data transmission indicated by the first information is configured as on, the first parameter indicates to perform initial transmission starting from a redundancy version RV0, and the performing the power detection on the first time-frequency resource indicated by the first information includes: performing, based on an RV sequence, the power detection on a PUSCH repetition on which initial data transmission can be performed in the plurality of configured grant CG-based PUSCH repetitions.

With reference to the second aspect, in some implementations of the second aspect, when it is determined that data transmission is not performed on the PUSCH repetition on which the initial data transmission can be performed in the plurality of configured grant CG-based PUSCH repetitions, the power detection is stopped on a PUSCH repetition on which initial data transmission cannot be performed in the plurality of configured grant CG-based PUSCH repetitions and that is after the PUSCH repetition on which the initial data transmission can be performed.

With reference to the second aspect, in some implementations of the second aspect, when it is determined that data transmission is performed on the PUSCH repetition on which the initial data transmission can be performed in the plurality of configured grant CG-based PUSCH repetitions, the performing the power detection on the first time-frequency resource indicated by the first information includes: performing the power detection on a PUSCH repetition on which initial data transmission cannot be performed in the plurality of configured grant CG-based PUSCH repetitions and that is after the PUSCH repetition on which the initial data transmission can be performed.

With reference to the second aspect, in some implementations of the second aspect, when the first information and the third information are higher layer signaling, the higher layer signaling includes radio resource control RRC signaling and medium access control-control element MAC-CE signaling, and a result of the collision resolution is to perform data transmission based on the indication of the first information, the collision resolution includes: sending fourth information, and determining, based on the fourth information, to perform the data transmission based on the indication of the first information; or determining, according to a preset rule, to perform the data transmission based on the indication of the first information, where the preset rule includes: uplink transmission being prioritized, or downlink transmission being prioritized, or one with a higher data transmission priority in uplink transmission and downlink transmission being prioritized.

According to a third aspect, this application provides a communication apparatus, including: a transceiver unit, configured to perform a function like receiving or sending of the terminal device in the first aspect; and a processing unit, configured to perform a processing function like collision resolution of the terminal device in the first aspect. For specific function implementations of the transceiver unit and the processing unit, refer to the foregoing steps of the method applied to the terminal device or the chip system included in the terminal device.

According to a fourth aspect, this application provides a communication apparatus, including: a processing unit, configured to perform a processing function like collision resolution of the network device in the second aspect; and a transceiver unit, configured to perform a function like receiving or sending of the network device in the second aspect. Optionally, the apparatus further includes a detection unit, and the detection unit is configured to perform a detection function like power detection in the second aspect. For specific function implementations of the transceiver unit, the processing unit, and the detection unit, refer to the foregoing steps of the method applied to the network device or the chip system in the network device.

According to a fifth aspect, this application provides a communication apparatus, including a processor. The processor is coupled to a memory, and the processor is configured to execute a computer program or instructions, to cause the communication apparatus to perform the method according to any one of the first aspect and the possible implementations of the first aspect, or cause the communication apparatus to perform the method according to any one of the second aspect and the possible implementations of the second aspect. Optionally, the foregoing communication apparatus may be specifically the foregoing terminal device, network device, or chip system.

In a possible implementation, the apparatus further includes the memory.

Optionally, the processor and the memory are integrated together, or the processor and the memory are separately disposed.

In another possible implementation, the memory is located outside the communication apparatus.

In a possible implementation, the communication apparatus further includes a communication interface, and the communication interface is used by the communication apparatus to communicate with another device, for example, to send or receive data and/or a signal.

For example, the communication interface may be a transceiver, a circuit, a bus, a unit, a module, or a communication interface of another type.

According to a sixth aspect, this application provides a communication apparatus, including a logic circuit and an input/output interface. The input/output interface is configured to output and/or input a signal, and the logic circuit is configured to perform the method according to any one of the first aspect and the possible implementations of the first aspect, or perform the method according to any one of the second aspect and the possible implementations of the second aspect. Optionally, the foregoing communication apparatus may be specifically the foregoing terminal device, network device, or chip system.

In a possible implementation, the logic circuit is configured to: when determining, based on second information, that first information indicates valid data transmission, perform collision resolution on data transmission indicated by the first information and data transmission indicated by third information.

According to a seventh aspect, this application provides a computer-readable storage medium, including a computer program or instructions. When the computer program or the instructions are run on a computer, the computer is caused to perform the method according to any one of the first aspect and the possible implementations of the first aspect, or the computer is caused to perform the method according to any one of the second aspect and the possible implementations of the second aspect.

According to an eighth aspect, this application provides a computer program product, including instructions. When the instructions are run on a computer, the computer is caused to perform the method according to any one of the first aspect and the possible implementations of the first aspect, or the computer is caused to perform the method according to any one of the second aspect and the possible implementations of the second aspect.

According to a ninth aspect, an embodiment of this application further provides a terminal device, configured to perform the method in the first aspect and the possible implementations of the first aspect.

According to a tenth aspect, an embodiment of this application further provides a network device, configured to perform the method in the second aspect and the possible implementations of the second aspect.

According to an eleventh aspect, an embodiment of this application further provides a communication system, including the communication apparatus provided in the third aspect and the possible implementations and the communication apparatus provided in the fourth aspect and the possible implementations.

### BRIEF DESCRIPTION OF DRAWINGS

FIG. 1 is a diagram of an architecture of a mobile communication system according to an embodiment of this application;
FIG. 2 is a diagram of a configured grant CG-based PUSCH transmission;
FIG. 3 is a diagram of repetition transmission when an RV sequence is {0, 2, 3, 1};
FIG. 4 is a diagram of repetition transmission when an RV sequence is {0, 3, 0, 3};
FIG. 5 is a diagram of repetition transmission when an RV sequence is {0, 0, 0, 0};
FIG. 6 is a diagram of a mapping pattern of a PUSCH repetition type A transmission mode;
FIG. 7 is a diagram of a mapping pattern of a PUSCH repetition type B transmission mode;
FIG. 8 is a diagram of time domain and frequency domain allocation in frequency division duplex, time division duplex, and sub-band full duplex;
FIG. 9 is a flowchart of a communication method 900 according to an embodiment of this application;
FIG. 10 is a flowchart of a communication method 1000 according to an embodiment of this application;
FIG. 11 is a block diagram of a structure of a communication apparatus 1100 according to an embodiment of this application;
FIG. 12 is a block diagram of a structure of a communication apparatus 1200 according to an embodiment of this application;
FIG. 13 is a block diagram of a structure of a communication apparatus 1300 according to an embodiment of this application;
FIG. 14 is a block diagram of a structure of a communication apparatus 1400 according to an embodiment of this application;
FIG. 15 is a block diagram of a communication apparatus 1500 according to an embodiment of this application; and
FIG. 16 is a block diagram of a communication apparatus 1600 according to an embodiment of this application.

### DESCRIPTION OF EMBODIMENTS

Example embodiments are described in detail herein, and examples of the example embodiments are presented in the accompanying drawings. When the following descriptions relate to the accompanying drawings, unless otherwise specified, same numbers in different accompanying drawings represent a same or similar element. Implementations described in the following example embodiments do not represent all implementations consistent with embodiments of this disclosure. On the contrary, they are only examples of apparatuses and methods that are described in the appended claims in detail and that are consistent with some aspects of embodiments of this disclosure.

Terms used in embodiments of this disclosure are merely for the purpose of describing specific embodiments, but are not intended to limit embodiments of this disclosure. Terms "a" and "the" in singular forms in embodiments of this disclosure and the appended claims are also intended to include plural forms, unless otherwise stated in the context clearly. It should be further understood that, the term "and/or" used herein indicates and includes any or all possible combinations of one or more associated listed items.

It should be understood that although terms such as "first", "second", and "third" may be used in embodiments of this disclosure to describe various information, the information is not limited by the terms. These terms are only used to differentiate information of a same type. For example, without departing from the scope of embodiments of this disclosure, first information may also be referred to as second information, and similarly the second information may also be referred to as the first information. Depending on the context, for example, a word "if" used herein may be explained as "when" or "in response to determining".

In descriptions of embodiments of this application, unless otherwise specified, "a plurality of" means two or more. For example, a plurality of systems mean two or more systems.

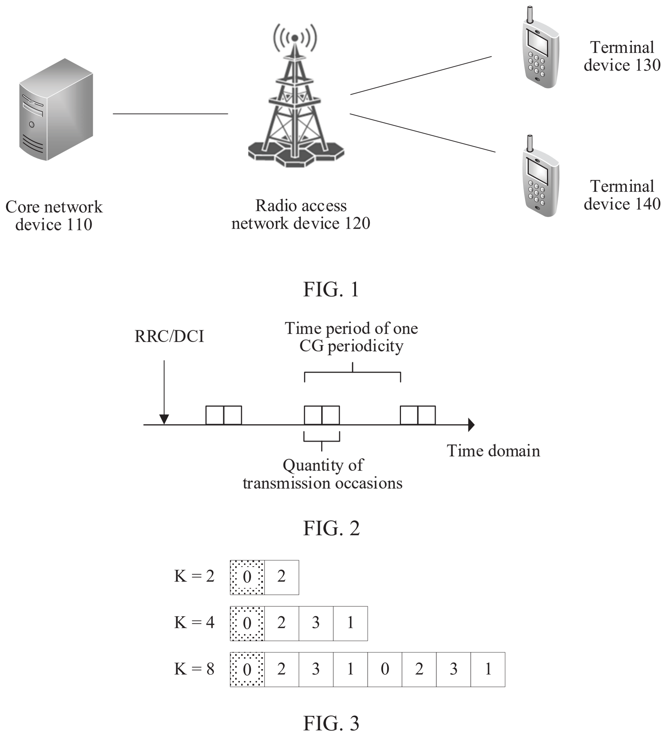

First, an application scenario of this application is described. FIG. 1 is a diagram of an architecture of a mobile communication system according to an embodiment of this application.

As shown in FIG. 1, the mobile communication system includes a core network device 110, a radio access network device 120, and at least one terminal device. The at least one terminal device is, for example, a terminal device 130 and a terminal device 140 in FIG. 1. The terminal device is connected to the radio access network device in a wireless manner, the radio access network device is connected to the core network device in a wireless or wired manner, and the radio access network device may be understood as a network device. The core network device and the radio access network device may be independent and different physical devices, or functions of the core network device and logical functions of the radio access network device are integrated into a same physical device, or some functions of the core network device and some functions of the radio access network device are integrated into one physical device. The terminal device may be located at a fixed location, or may be mobile.

When the radio access network device communicates with the terminal device, the radio access network device may manage one or more cells, and there may be an integer quantity of terminal devices in one cell. Optionally, the radio access network device 120 and the terminal device 130 form a single-cell communication system. Without loss of generality, a cell is denoted as a cell #1. The radio access network device 120 may be a network device in the cell #1, or the radio access network device 120 may serve a terminal device (for example, the terminal device 130) in the cell #1.

It should be noted that the cell may be understood as an area within coverage of a radio signal of the network device. Embodiments of this application may be applied to a sub-band full duplex SBFD cell in a time division duplex TDD system, and the radio access network device 120 may be configured to perform an operation in an SBFD mode.

In embodiments of this application, a transmit-end device may be a terminal device, and a receive-end device may be a network device. For example, the transmit-end device is the terminal device 130, and the receive-end device is the radio access network device 120.

FIG. 1 is merely a diagram. The communication system may further include other network devices, for example, may further include a wireless relay device and a wireless backhaul device. This is not shown in FIG. 1. Quantities of core network devices, radio access network devices, and terminal devices that are included in the mobile communication system are not limited in embodiments of this application.

The radio access network device is an access device via which the terminal device accesses the mobile communication system in a wireless manner, a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. A specific technology and a specific device form that are used by the radio access network device are not limited in embodiments of this application.

The terminal device may also be referred to as a terminal (terminal), a user equipment (user equipment, UE), a mobile station (mobile station, MS), a mobile terminal (mobile terminal, MT), or the like. The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The radio access network device and the terminal device may be deployed on land, including an indoor or outdoor device, a handheld device, or a vehicle-mounted device; or may be deployed on the water surface; or may be deployed on aircrafts, balloons and satellites in the air. Application scenarios of the radio access network device and the terminal device are not limited in embodiments of this application.

Embodiments of this application are applicable to downlink signal transmission, uplink signal transmission, or device to device (device to device, D2D) signal transmission. For the downlink signal transmission, a sending device is a radio access network device, and correspondingly, a receiving device is a terminal device. For the uplink signal transmission, a sending device is a terminal device, and correspondingly, a receiving device is a radio access network device. For the D2D signal transmission, a sending device is a terminal device, and correspondingly, a receiving device is also a terminal device. A signal transmission direction is not limited in embodiments of this application.

Communication between the radio access network device and the terminal device and communication between terminal devices may be performed by using a licensed spectrum (licensed spectrum), may be performed by using an unlicensed spectrum (unlicensed spectrum), or may be performed by using both of a licensed spectrum and an unlicensed spectrum. A spectrum below 6 GHz, a spectrum above 6 GHz, or both of a spectrum below 6 GHz and a spectrum above 6 GHz may be used for communication between the radio access network device and the terminal device, and between terminal devices. Spectrum resources used by the radio access network device and the terminal device are not limited in embodiments of this application.

A network architecture and a service scenario described in embodiments of this application are intended to describe technical solutions in embodiments of this application more clearly, and do not constitute a limitation on the technical solutions provided in embodiments of this application. A person skilled in the art may know that: With evolution of the network architecture and emergence of new service scenarios, the technical solutions provided in embodiments of this application are also applicable to similar technical problems.

In embodiments of this application, an NR network scenario in a wireless communication network is used as an example to describe some scenarios. It should be noted that the solutions in embodiments of this application may be further applied to another wireless communication network, and a corresponding name may also be replaced with a name of a corresponding function in the another wireless communication network.

The following describes some concepts related to a communication method and a communication apparatus provided in embodiments of this application.

A 5th generation (5th generation, 5G) new radio (new radio, NR) technology is used as an example. This application is not limited thereto. Physical uplink shared channel (physical uplink shared channel, PUSCH) transmission modes in NR include the following types.

A first type is dynamic scheduling based PUSCH transmission: During PUSCH transmission, the PUSCH transmission is scheduled by using downlink control information (downlink control information, DCI). In other words, after receiving DCI scheduling, a terminal device may perform the PUSCH transmission.

A second type is configured grant (configured grant, CG) type 1-based PUSCH transmission: This is a semi-persistent scheduling PUSCH. In an uplink transmission process, an uplink scheduling resource is used to configure, by using radio resource control (radio resource control, RRC) signaling, a related parameter of CG transmission, for example, a CG periodicity (periodicity), a CG time domain resource, and a CG frequency domain resource. In addition, a corresponding CG resource is activated by using the RRC signaling. The terminal device may periodically and repeatedly perform, without receiving DCI, uplink transmission by using a same time-frequency resource.

A third type is configured grant type 2-based PUSCH transmission: The terminal device receives a configuration of a higher layer, semi-persistent time-frequency resources configured by the higher layer are for selection and use of the terminal device, and the semi-persistent time-frequency resources are activated or deactivated by using DCI. If the DCI indicates activation, the terminal device sends, based on a data transmission requirement of the terminal device, a PUSCH by using the semi-persistent time-frequency resources. This is similar to the second type of PUSCH transmission mode. After the transmission resources are activated by using the DCI, a network device may further deactivate the transmission resources by using the DCI, and the deactivated transmission resources cannot be used by the terminal device to perform data transmission. It should be understood that uplink periodic service transmission may be performed based on a configured grant CG or configured scheduling (configured scheduling, CS).

### CG resource configuration:

In embodiments of this application, the network device may configure at least one set of CG resource configurations (configurations) for the terminal device. A parameter of one set of CG resource configurations may include at least one of the following: (1) duration of the CG periodicity (periodicity); (2) a quantity of CG transmission occasions included in one CG periodicity, or a quantity of CG resources included in one CG periodicity; and (3) time-frequency location information of CG resources in one CG periodicity. One CG periodicity may include one or more CG resources. A plurality of CG resources included in one CG periodicity may be used for transmission of data or a transport block (transport block, TB), and the data transmitted by using the plurality of CG resources may be the same or different. A plurality of CG resources included in one CG periodicity are the same or overlapping in frequency domain. A minimum value of one CG periodicity is two symbols (symbols) and a maximum value of one CG periodicity is 5120 slots (slots).

### CG transmission occasion (transmission occasion, TO):

The CG transmission occasion may also be referred to as an occasion (occasion), a CG occasion, a transmission occasion, a transmission opportunity, CG PUSCH transmission, a PUSCH repetition, a PUSCH transmission occasion, or the like. This is not limited in this application.

The CG transmission occasion includes a time domain resource for transmitting data once, for example, a resource like a slot, a subframe, or a mini-slot (mini-slot). A length of the mini-slot may be one or more symbols (for example, one symbol, two symbols, or four symbols).

The CG transmission occasion may be used by the terminal device to send uplink information to the network device. The uplink information may include uplink data and/or uplink signaling. The uplink signaling may include at least one of the following: physical layer signaling, medium access control (medium access control, MAC) layer signaling, and RRC layer signaling. The uplink data and/or the uplink signaling may be carried on a specific PUSCH of the terminal device.

In a possible implementation, one CG transmission occasion may correspond to some CG resources in one CG periodicity.

For simplicity, in the following descriptions, the CG periodicity is represented by P, and the CG transmission occasion is represented by K.

In the second type of transmission mode, symbols included in all transmission opportunities are symbols configured by the higher layer for the terminal device to send the PUSCH. However, in the third type of transmission mode, except a 1^{st} group of transmission opportunities after the downlink control information DCI for activation, symbols included in other transmission opportunities are all symbols configured by the higher layer for the terminal device to send the PUSCH. DCI formats may include, for example, a DCI format 0-0 and a DCI format 0-1. This is not limited in this application.

FIG. 2 is a diagram of a configured grant CG-based PUSCH transmission.

In the uplink transmission process, after the uplink scheduling resource is allocated by using the radio resource control layer signaling or the downlink control information, the uplink transmission may be periodically and repeatedly performed by using the same time-frequency resource, as shown in FIG. 2.

In an implementation, a parameter of one set of CG resource configurations may further include other possible information, for example, one or more of the following parameters of the PUSCH: frequency hopping indication information (indicating intra-slot or inter-slot frequency hopping), DMRS configuration information (indicating a type, a location, and a length of a demodulation reference signal (demodulation reference signal, DMRS), whether the demodulation reference signal is pre-coded, and/or the like), a modulation and coding scheme (modulation and coding scheme, MCS) table, a resource allocation manner (which may be a type 0 (type 0) resource allocation manner, a type 1 (type 1) resource allocation manner, or a dynamic switching based resource allocation manner), power control indication information, and a quantity of hybrid automatic repeat request (hybrid automatic repeat request, HARQ) processes (which, for example, may be one of 1 to 16). This is not specifically limited.

### Redundancy version (redundancy version, RV):

For a PUSCH redundancy version configuration method, redundancy version information in higher layer signaling can indicate an RV version pattern used in K transmission occasions. For an n^{th} transmission occasion in K times of transmission, a (mod(n - 1, 4) + 1)^{th} value in an RV sequence is used, where n = 1, 2, ..., or K. There are three cases for the RV sequence: The RV sequence is configured as {0, 2, 3, 1}, the RV sequence is configured as {0, 3, 0, 3}, and the RV sequence is configured as {0, 0, 0, 0}.

UE may also determine initial transmission (which may also be referred to as initial sending or 1^{st} sending (initial transmission)) of the TB based on a specific higher layer parameter (for example, Configuredgrantconfig-StartingfromRV0). If startingFromRV0 is not enabled, the UE always starts data transmission from a 1^{st} transmission location. If startingFromRV0 is enabled, there may be the following cases for a location from which the initial transmission of the transport block starts.

If the RV sequence is configured as {0, 2, 3, 1}, as shown in FIG. 3, where FIG. 3 is a diagram of repetition transmission when the RV sequence is {0, 2, 3, 1}, and shadow blocks indicate locations at which initial transmission can be performed, the initial transmission of the transport block may start from a 1^{st} transmission occasion in K repetitions.

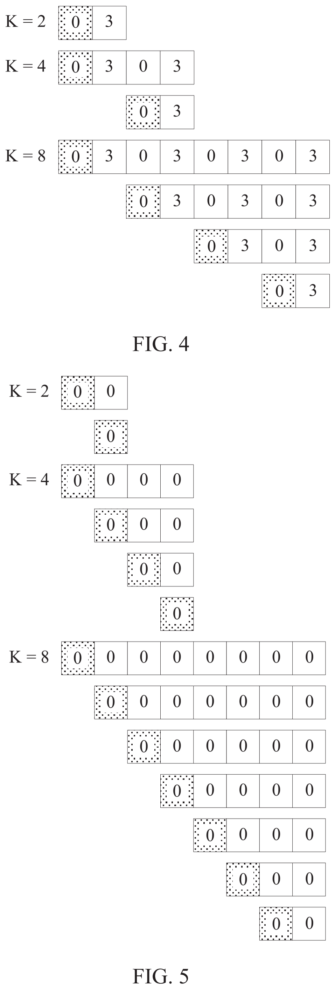

If the RV sequence is configured as {0, 3, 0, 3}, as shown in FIG. 4, where FIG. 4 is a diagram of repetition transmission when the RV sequence is {0, 3, 0, 3}, the initial transmission of the transport block may start from any transmission occasion associated with RV = 0 in K repetitions.

If the RV sequence is configured as {0, 0, 0, 0}, as shown in FIG. 5, where FIG. 5 is a diagram of repetition transmission when the RV sequence is {0, 0, 0, 0}, the initial transmission of the transport block may start from any transmission occasion in K repetitions, except a last transmission occasion when K = 8.

### PUSCH repetition transmission:

There are two PUSCH repetition types in an NR system: PUSCH repetition type A (repetition Type A) and PUSCH repetition type B (PUSCH repetition Type B). The repetition type A is used in release Rel-15, and the repetition type B is newly introduced into release Rel-16.

### 1. PUSCH repetition type A transmission mode:

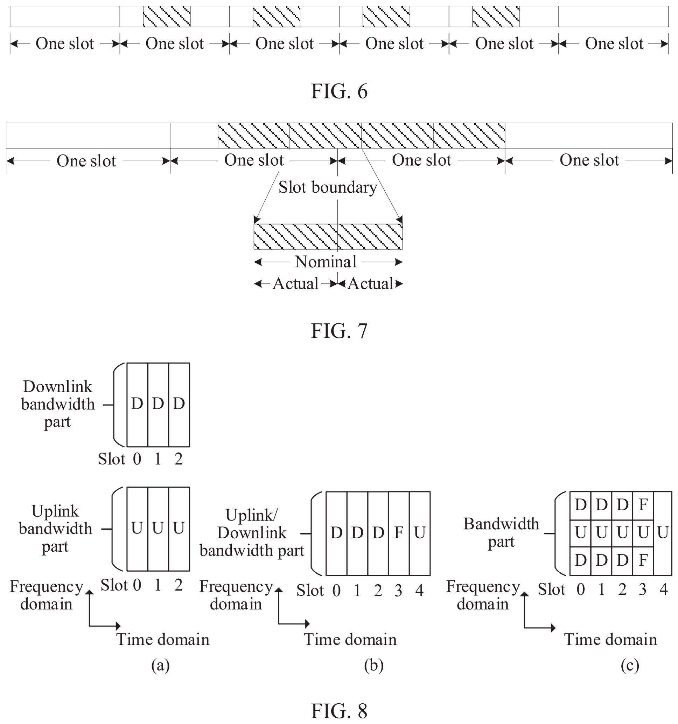

For the PUSCH repetition type A, repetition is performed in a unit of a slot (slot). One PUSCH is transmitted in K consecutive slots, namely, K transmission occasions. The transmission starts from an S^{th} symbol in a start slot, and lasts for L symbols in each transmission occasion. In addition, S + L - 1 symbols do not exceed a slot boundary. For example, based on an indication, a start symbol (S) of a PUSCH in a slot is 4, a length (L) is 6, and a quantity of repetitions (K) is 4; and a mapping pattern of the PUSCH is shown in FIG. 6. FIG. 6 is a diagram of a mapping pattern of a PUSCH repetition type A transmission mode. The PUSCH appears in four consecutive slots, and locations of OFDM symbols occupied by the PUSCH are the same.

### 2. PUSCH repetition type B transmission mode:

To reduce latency and improve reliability, R16 supports a PUSCH repetition transmission solution in a unit of a sub-slot, and allows cross-slot PUSCH transmission to further reduce the latency. In time domain, transmission of one PUSCH starts from an S^{th} symbol in a start slot, and K transmission occasions (nominal repetitions) are consecutively sent. Each transmission occasion occupies L symbols back to back (back to back), and transmission on S + L - 1 symbols may cross a slot boundary. For example, based on an indication, a start symbol (S) of a PUSCH in a slot is 4, a length (L) is 6, and a quantity of repetitions (K) is 4; and a mapping pattern of the PUSCH is shown in FIG. 7. FIG. 7 is a diagram of a mapping pattern of a PUSCH repetition type B transmission mode. The PUSCH starts from a symbol 4, a length of a single repetition of the PUSCH is 6, and the PUSCH is consecutively repeated four times. In an NR release Rel 16 protocol, a value of S ranges from 0 to 13, a value of L ranges from 1 to 14, and one slot includes 14 OFDM symbols. Because there is no special limitation on a combination of values of S, L, and K, in practice, a case in which a repetition crosses a slot boundary may occur, for example, a 2^{nd} repetition in FIG. 7. In this case, one repetition is split into two repetitions by using the slot boundary as a boundary. In the protocol, the repetition that is not split is referred to as a nominal repetition (nominal repetition), and the repetition obtained through the splitting is referred to as an actual repetition (actual repetition). The quantity K of repetitions indicated by a network side is a total quantity of nominal repetitions, and a total quantity of actual repetitions is greater than or equal to K.

FIG. 8 is a diagram of time domain and frequency domain allocation in frequency division duplex, time division duplex, and sub-band full duplex.

As shown in FIG. 8, (a) in FIG. 8 is a diagram of time domain and frequency domain allocation in frequency division duplex. Downlink transmission may be performed on a downlink frequency domain resource group (downlink bandwidth part, DL BWP) in a slot 0, and uplink transmission may be performed on an uplink frequency domain resource group (uplink bandwidth part, UL BWP) in the slot 0. The DL BWP and the UL BWP are on different carriers and are separated in frequency domain. The frequency domain resource group is also referred to as a bandwidth part.

### Time division duplex and uplink-downlink time division duplex configuration:

The time division duplex is a duplex mode widely used in wireless communication. Based on this, downlink (downlink, DL) transmission and uplink (uplink, UL) transmission on a communication interface, namely, a Uu interface (Uu interface), used for communication between the network device and the terminal device may be performed at a same carrier frequency in a time division manner.

A 5G base station sends an uplink-downlink TDD configuration through the Uu interface, to indicate a DL and UL time allocation manner in a time range to the UE. As shown in FIG. 8, (b) in FIG. 8 is a diagram of time domain and frequency domain allocation in time division duplex. A center frequency of a downlink bandwidth part is the same as a center frequency of an uplink bandwidth part, where D represents a DL slot, U represents a UL slot, and F represents a configurable slot. Bandwidth of the downlink bandwidth part may be the same as or different from bandwidth of the uplink bandwidth part. At a same moment, the terminal device can perform only uplink transmission or downlink transmission. For example, the terminal device can perform only the downlink transmission in a slot 0, and can perform only the uplink transmission in a slot 4. A slot 3 is a flexible slot, to be specific, may be used for the uplink transmission or the downlink transmission, but the uplink transmission and the downlink transmission cannot be performed simultaneously. A minimum granularity of uplink-downlink transmission switching is a symbol. For example, the slot 3 is a flexible slot, and includes 14 or 12 OFDM symbols. The first M symbols are downlink symbols, and the last N symbols are uplink symbols. When the flexible slot includes 14 OFDM symbols, 14 - M - N symbols in the middle are flexible symbols, where 0 ≤ M ≤ 14, 0 ≤ N ≤ 14, and M + N ≤ 14. The downlink symbols are used for the downlink transmission, the uplink symbols are used for the uplink transmission, and the flexible symbols may be used for both the uplink transmission and the downlink transmission. A specific transmission direction is notified by the network device to the terminal device through scheduling by using RRC signaling or DCI.

A TDD configuration parameter includes but is not limited to slot indexes of a downlink slot, an uplink slot, and a flexible slot, and symbol indexes of an uplink symbol, a downlink symbol, and a flexible symbol in the flexible slot. Downlink symbols in the downlink slot and the flexible slot are used for downlink data transmission, uplink symbols in the uplink slot and the flexible slot are used for uplink data transmission, and the flexible symbol in the flexible slot may be used for the uplink data transmission or the downlink data transmission. The specific transmission direction is notified by the network device to the terminal device through scheduling by using higher layer signaling, for example, RRC signaling, medium access control-control element (medium access control-control element, MAC-CE) signaling, or DCI. If the terminal device receives scheduling information twice on a same symbol, and transmission directions indicated in the scheduling information are opposite, the terminal device needs to determine a final transmission direction according to a rule.

Uplink-downlink TDD configurations are classified into a cell-level uplink-downlink TDD configuration and a UE-level uplink-downlink TDD configuration. The cell-level uplink-downlink TDD configuration is applicable to all UEs within a coverage area of a gNB. The cell-level uplink-downlink TDD configuration indicates a quantity of DL slots and a quantity of UL slots at a slot (slot) granularity, and indicates a quantity of DL symbols and a quantity of UL symbols at an orthogonal frequency division multiplexing (orthogonal frequency division multiplexing, OFDM) symbol granularity. The UE-level uplink-downlink TDD configuration is applicable to a UE within the coverage area of the gNB. On the basis of the cell-level uplink-downlink TDD configuration, a configurable slot is further introduced. To be specific, in addition to the DL slot represented by D and the UL slot represented by U, the configurable slot represented by F is further introduced. A granularity of an uplink-downlink TDD configuration in the configurable slot is an OFDM symbol. To be specific, different symbols in a same slot may be in different uplink and downlink states. All OFDM symbols in the configurable slot may be configured as UL symbols or DL symbols.

### Sub-band full duplex and sub-band full duplex configuration:

As shown in FIG. 8, (c) in FIG. 8 is a diagram of time domain and frequency domain allocation in sub-band full duplex. It should be understood that the sub-band full duplex may also be referred to as complementary time division duplex (complementary TDD, C-TDD), full duplex (full duplex), or the like. To be specific, in a slot, for example, a slot 0, there is a segment of frequency domain resources in a downlink BWP, and uplink transmission may be performed on the frequency domain resources, so that the uplink transmission can be performed in the slot 0. This reduces uplink transmission latency. The segment of frequency domain resources is usually referred to as an uplink sub-band. In this case, downlink transmission may also be performed in the slot 0. The network device may simultaneously perform the uplink transmission and the downlink transmission in the slot 0. The terminal device may also simultaneously perform the uplink transmission and the downlink transmission in the slot 0, in other words, the terminal device may be a full-duplex terminal device. In addition, the terminal device may alternatively perform only the uplink transmission or the downlink transmission, in other words, the terminal device may be a half-duplex terminal device.

SBFD configuration parameters include but are not limited to the following parameters: an SBFD slot index and a location of an SBFD sub-band in an SBFD slot. The SBFD slot may be a part of a downlink slot or an uplink slot configured in the TDD parameter, or may be a slot different from the three types of slots in the TDD parameter. The SBFD sub-band may be a frequency domain location of an uplink sub-band and/or a downlink sub-band.

### Preconfigured scheduling cancellation through dynamic scheduling:

There are two types of scheduling mechanisms in NR. One type is dynamic scheduling. To be specific, the network device schedules, by using physical layer downlink control information (DCI), the terminal device to perform signal transmission. An advantage of the scheduling mechanism is flexibility, but a disadvantage of the scheduling mechanism is that the network device needs to deliver the DCI for each time of scheduling, and signaling overheads are high. The other type is preconfigured scheduling. To be specific, the network device preconfigures a periodic resource for the terminal device by using higher layer signaling, so that the terminal device can perform, without receiving DCI, signal transmission by using the periodic resource. An advantage of the scheduling mechanism is that DCI overheads are reduced, but a disadvantage of the scheduling mechanism is inflexibility. The scheduling mechanism cannot adapt to a change in a size of a to-be-transmitted data packet, a change in an air interface channel characteristic, and the like.

Generally, the network device may cancel the preconfigured scheduling through dynamic scheduling. To be specific, if time-frequency resources for signal transmission scheduled in the preconfigured scheduling and the dynamic scheduling partially or completely overlap, the terminal device cancels the signal transmission of the preconfigured scheduling, and performs the signal transmission based on dynamic DCI scheduling. In another implementation, if time-frequency resources for signal transmission scheduled in the preconfigured scheduling and the dynamic scheduling partially or completely overlap in time, the terminal device cancels the signal transmission of the preconfigured scheduling, and performs the signal transmission based on dynamic DCI scheduling.

The signal transmission in the foregoing descriptions includes but is not limited to control information transmission, data transmission, and reference signal transmission.

### Uplink multiplexing technology:

To reduce cross-modulation interference in uplink sending of the terminal device, when a physical uplink control channel (physical uplink control channel, PUCCH) overlaps another PUCCH or a PUCCH overlaps a PUSCH in time domain, uplink multiplexing is performed.
(1) Multiplexing between a plurality of PUCCHs: The PUCCH may carry uplink control information (UCI, Uplink control information), including a scheduling request SR, a hybrid automatic repeat request acknowledgment HARQ-ACK, channel state information (CSI), and the like. For a plurality of uplink carriers in a same PUCCH group, the PUCCH is sent on a maximum of one uplink carrier at a same moment. If two or more PUCCHs carrying different UCI overlap in time, the UCI needs to be carried on a same PUCCH for sending. The PUCCH used for sending may be one of the original two or more PUCCHs, or may be a new PUCCH. This process is referred to as multiplexing (multiplexing) the UCI to the PUCCH.
(2) Multiplexing between a plurality of PUCCHs: The PUCCH may carry uplink control information UCI, including a scheduling request SR, a hybrid automatic repeat request acknowledgment HARQ-ACK, channel state information (CSI), and the like. For a plurality of uplink carriers in a same PUCCH group, the PUCCH is sent on a maximum of one uplink carrier at a same moment. If two or more PUCCHs carrying different UCI overlap in time, the UCI needs to be carried on a same PUCCH for sending. The PUCCH used for sending may be one of the original two or more PUCCHs, or may be a new PUCCH. This process is referred to as multiplexing (multiplexing) the UCI to the PUCCH.

For the second case, when the UCI is multiplexed on the PUSCH for transmission, the UCI includes at least one of the hybrid automatic repeat request acknowledgment (hybrid automatic repeat request-acknowledgement, HARQ-ACK), the channel state information (channel state information, CSI), and configured grant-uplink control information (configured grant-uplink control information, CG-UCI).

### High-low priority cancellation mechanism for a same user:

In NR, a transmission priority is defined for the uplink transmission, and the priority includes but is not limited to a logical channel priority and a physical channel priority. If time-frequency resources for signal transmission with different priorities partially or completely overlap, the terminal device cancels preconfigured scheduling of signal transmission with a low priority, and performs signal transmission with a high priority. In another implementation, if time-frequency resources for signal transmission with different priorities partially or completely overlap in time, the terminal device cancels preconfigured scheduling of signal transmission with a low priority, and performs signal transmission with a high priority.

The signal transmission in the foregoing descriptions includes but is not limited to control information transmission, data transmission, and reference signal transmission.

### Inter-user uplink cancellation mechanism:

When the terminal device needs to perform transmission of a service having a high requirement on latency and reliability, for example, an ultra reliable and low latency communications (ultra reliable and low latency communications, URLLC) service, the terminal device may send a scheduling request to the network device, and the network device schedules an appropriate time-frequency resource for the terminal device as soon as possible to meet a latency requirement of the URLLC service. In this case, if the network device has scheduled a currently available time-frequency resource to one or more other terminal devices to transmit a service having a low requirement on latency, for example, an enhanced mobile broadband (enhanced mobile broadband, eMBB) service, the network device may re-schedule the scheduled time-frequency resource to the terminal device that transmits the URLLC service, to ensure a low latency requirement and a high reliability requirement of the URLLC service. The network device sends an uplink cancel indication (uplink cancellation indication, UL CI) to the one or more terminal devices that transmit the eMBB service. The UL CI indicates one time-frequency resource, and the time-frequency resource is to be scheduled by the network device to the terminal device that transmits the URLLC service. After receiving the UL CI, the UE that transmits the eMBB service cancels, on the corresponding time-frequency resource, eMBB service transmission that is to be started or is being performed.

With reference to the foregoing scenario, on one time-frequency resource, for example, one symbol (symbol), if the terminal device receives the scheduling information twice, and the transmission directions indicated in the two pieces of scheduling information are inconsistent, the terminal device needs to determine a final transmission direction according to a rule. However, in this scenario, a problem of transmission cancellation caused by receiving a plurality of pieces of signaling is not considered. In this case, if the transmission direction is first determined, and then whether to cancel transmission on the time-frequency resource is determined, when the transmission on the time-frequency resource is cancelled, a resource waste in a transmission direction determining process is caused. In addition, if a channel obtains a transmission opportunity in the transmission direction determining process, the time-frequency resource may be idle due to the problem of transmission cancellation, reducing an overall network capacity.

In view of the foregoing technical problem, this application provides a communication method and a communication apparatus, to reduce a resource waste caused by transmission cancellation after transmission resource allocation when there is a collision between transmission directions of data transmission indicated by different information.

The following describes the communication method and the communication apparatus in embodiments of this application with reference to the accompanying drawings.

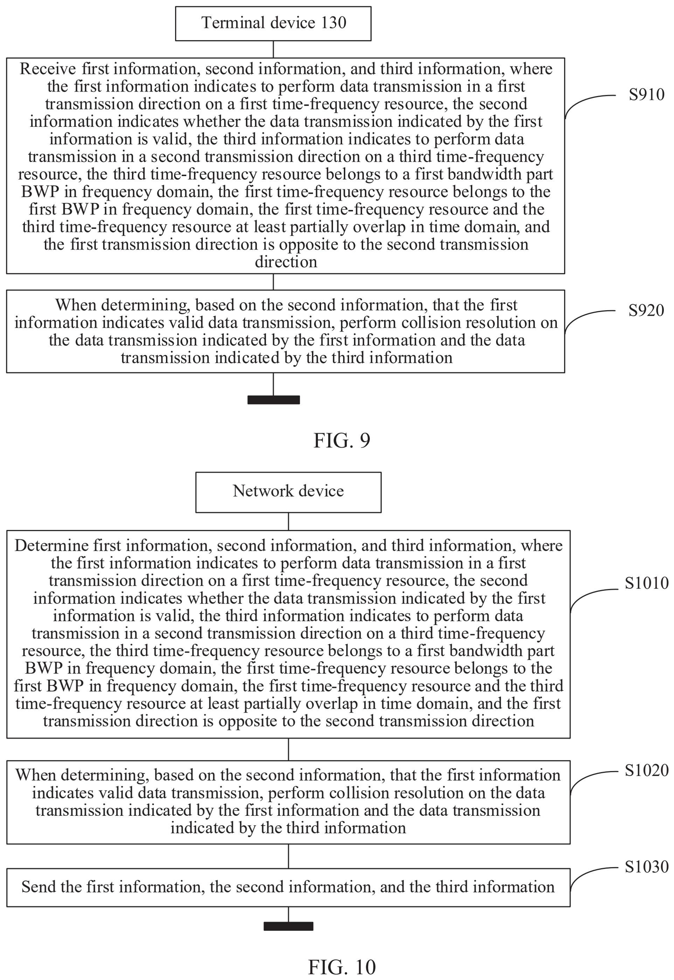

FIG. 9 is a flowchart of a communication method 900 according to an embodiment of this application. A method procedure in FIG. 9 may be performed by a terminal device 130 or a chip system included in the terminal device 130, or may be performed by a unit and/or a component (for example, a chip or an integrated circuit) that is installed in the terminal device 130 and that has a corresponding function. This is not limited in this embodiment of this application. In some embodiments, the communication method 900 in this embodiment of this application may be applied to an SBFD system.

The following uses the terminal device 130 as an example for description. As shown in FIG. 9, the communication method 900 includes the following steps.

S910: The terminal device 130 receives first information, second information, and third information, where the first information indicates to perform data transmission in a first transmission direction on a first time-frequency resource, the second information indicates whether the data transmission indicated by the first information is valid, the third information indicates to perform data transmission in a second transmission direction on a third time-frequency resource, the third time-frequency resource belongs to a first bandwidth part BWP in frequency domain, the first time-frequency resource belongs to the first BWP in frequency domain, the first time-frequency resource and the third time-frequency resource at least partially overlap in time domain, and the first transmission direction is opposite to the second transmission direction.

Specifically, the second information received by the terminal device 130 may indicate whether the data transmission indicated by the first information is valid, and the first information and the third information indicate information about performing data transmission in different directions. Because the first time-frequency resource belongs to the first bandwidth part BWP of the third time-frequency resource in frequency domain, and the first time-frequency resource and the third time-frequency resource at least partially overlap in time domain, the direction of the data transmission indicated by the first information collides with the direction of the data transmission indicated by the third information.

For example, the data transmission indicated by the first information is uplink data transmission, and the data transmission indicated by the third information is downlink data transmission. When the third time-frequency resource belongs to the first bandwidth part BWP in frequency domain, the first time-frequency resource belongs to the first BWP in frequency domain, and the first time-frequency resource and the third time-frequency resource at least partially overlap in time domain, the direction of the data transmission indicated by the first information collides with the direction of the data transmission indicated by the third information.

Optionally, a time-frequency resource (for example, the first time-frequency resource) may be an SBFD symbol or an SBFD slot. The time-frequency resource includes a time-frequency resource occupied by a channel for data transmission, for example, an uplink channel or a downlink channel. The uplink channel includes a physical uplink control channel PUCCH and/or a physical uplink shared channel PUSCH. The downlink channel includes a physical downlink control channel PDCCH and/or a physical downlink shared channel PDSCH. The PUCCH may carry uplink control information UCI, including a scheduling request (scheduling request, SR), a hybrid automatic repeat request acknowledgment HARQ-ACK, channel state information (channel state information, CSI), and the like.

Optionally, multiplexed transmission is used for the uplink channel, for example, multiplexing between a plurality of PUCCHs or multiplexing between a PUCCH and a PUSCH.

Optionally, the first information may be one of higher layer signaling and downlink control information DCI, the second information may be one of higher layer signaling and downlink control information DCI, and the third information may be one of higher layer signaling and downlink control information DCI. The higher layer signaling includes radio resource control RRC signaling and medium access control-control element MAC-CE signaling.

Optionally, a transmission direction includes a signal transmission direction or a configured symbol direction.

When receiving the second information, the terminal device needs to determine, based on the second information, whether the data transmission indicated by the first information is valid.

In some embodiments, the second information indicates that the data transmission indicated by the first information is valid, or indicates that the data transmission indicated by the first information is invalid. It should be understood that, that the second information indicates that the data transmission indicated by the first information is valid, in other words, the first information indicates valid data transmission, means that it may be determined, based on the second information, that the data transmission may be performed on the first time-frequency resource when a direction of transmission on the first time-frequency resource is the first transmission direction. That the second information indicates that the data transmission indicated by the first information is invalid, in other words, the first information indicates invalid data transmission, means that it may be determined, based on the second information, that the data transmission is not performed, in other words, the data transmission indicated by the first information is cancelled. That the first information indicates the valid data transmission may be understood as that a part or all of the data transmission that is indicated by the first information and that is performed on the first time-frequency resource is valid data transmission.

For transmission in which scheduling information has been received and that has not started, an NR standard provides a plurality of manners of determining cancelled service transmission.

### 1. PUSCH uplink transmission is skipped (skipped).

Uplink transmission is skipped for a PUSCH transmission that has been scheduled by a network device. If the terminal device has no uplink data to be sent, the terminal device may ignore scheduling of the network device, and may not perform PUSCH transmission, in other words, may skip uplink transmission. A current NR standard supports two UL skip mechanisms:
(1) Basic uplink transmission skip: A case in which a PUSCH and a PUCCH overlap is not considered, and the PUSCH transmission may be skipped provided that the terminal device has no uplink data.
(2) Enhanced uplink transmission skip: When a PUSCH and a PUCCH overlap, a padding packet needs to be sent on the PUSCH, and UCI originally carried on the PUCCH is multiplexed on the PUSCH, and is sent together with the padding packet. When the PUSCH and the PUCCH do not overlap, the PUSCH transmission may be skipped.

### 2. A resource of uplink transmission with a high priority collides with a resource of uplink transmission with a low priority.

A priority of uplink transmission may be indicated in DCI for scheduling an uplink channel, or may be configured by using higher layer signaling. In conclusion, there is a manner in which whether a priority of an uplink channel is a high priority or a low priority can be determined. For example, a priority of a dynamic scheduling PUSCH is indicated in the DCI, and a priority of a configured scheduling PUSCH is configured by using the higher layer signaling. The priority of the uplink channel may be a physical layer priority, or may be a logical channel priority. Once a resource of an uplink channel with a high priority overlaps a resource of an uplink channel with a low priority, the uplink channel with the low priority is cancelled.

### 3. Pre-allocated uplink transmission is cancelled based on dynamic scheduling uplink transmission, or pre-allocated downlink transmission is cancelled based on dynamic scheduling downlink transmission.

Dynamic scheduling may be delivering DCI by the network device. The DCI carries scheduling information (including time-frequency resource allocation, a coding and modulation scheme, a transport block size, and the like for data transmission). The pre-allocated transmission may be delivering scheduling information by the network device by using higher layer signaling (for example, RRC signaling and a MAC CE), where the scheduling information includes time-frequency resource allocation, a coding and modulation scheme, a transport block size, and the like for data transmission. A pre-allocation scheduling manner usually corresponds to periodic data transmission, in other words, a periodic time-frequency resource and information such as the coding and modulation scheme and the transport block size remain unchanged. For example, when a user receives the DCI, if data transmission scheduled by using the DCI and data transmission indicated by RRC signaling received before the DCI overlap on a time-frequency resource, the data transmission indicated by the RRC signaling received before the DCI may be cancelled.

### 4. Cancellation caused by an uplink multiplexing mechanism is performed.

For example, if a PUCCH is to be sent in one or N slots, a PUSCH is also to be sent in one or some slots, and the sending of the PUCCH and the sending of the PUSCH may overlap in some slots, in the overlapping slots, the terminal device sends only the PUCCH, and does not send the PUSCH.

For another example, if a PUCCH 1 is to be sent in one slot, a PUCCH 2 is also to be sent in the slot, and the PUCCH 2 and the PUCCH 1 may overlap in time, the terminal device places UCI that needs to be sent on the PUCCH 1 and the PUCCH 2 on a PUCCH 3 for sending, where the PUCCH 3 may be the PUCCH 1, the PUCCH 2, or another PUCCH different from the PUCCH 1 and the PUCCH 2.

### 5. Cancellation indication information indicates to cancel PUSCH transmission.

The network device may send cancellation indication information CI to the terminal device, and the cancellation indication information is carried in a DCI format 2_4. A bitmap is used to specifically indicate, in a reference time-frequency resource, a specific resource location at which a PUSCH needs to be cancelled. Specifically, a location indicated as 1 indicates that a PUSCH needs to be cancelled. If at least one symbol in symbols occupied by a PUSCH is indicated as 1, all PUSCHs starting from a 1^{st} symbol indicated as 1 in the PUSCH are cancelled. For example, a PUSCH occupies symbols 2 to 12, where the symbols 3 and 4 are indicated as 1. In this case, the symbol 2 is still reserved, and all PUSCHs on the symbols 3 to 12 starting from the symbol 3 are cancelled. In other words, the PUSCHs on the symbols 3 to 12 are not sent.

It should be understood that the foregoing is merely an example for description, and does not represent all scenarios in this embodiment of this application. In this embodiment of this application, the second information may directly indicate that the data transmission indicated by the first information is valid. Optionally, the second information may indirectly indicate that the data transmission indicated by the first information is valid. The following provides descriptions with reference to some embodiments.

In some embodiments, the second information is uplink cancellation indication information UL CI. For example, when a PUSCH indicated by the first information occupies the symbols 2 to 4, and the UL CI indicates that all PUSCHs on the symbols 6 to 12 are cancelled, the second information indicates that the data transmission indicated by the first information is valid, in other words, the first information indicates valid data transmission. When a PUSCH indicated by the first information occupies the symbols 2 to 8, and the UL CI indicates that all PUSCHs on the symbols 6 to 12 are cancelled, the second information indicates that the data transmission indicated by the first information is invalid, in other words, the first information indicates invalid data transmission.

In some embodiments, the second information includes information about whether the terminal device performs uplink data transmission on the first time-frequency resource. Optionally, the second information is determined by the terminal device. For example, when the terminal device performs the uplink data transmission on the first time-frequency resource, the second information indicates that the data transmission indicated by the first information is valid, in other words, the first information indicates valid data transmission. When the terminal device has no uplink data to be transmitted on the first time-frequency resource, the second information indicates that the data transmission indicated by the first information is invalid, in other words, the first information indicates invalid data transmission. Optionally, when the first information is DCI and the second information is higher layer signaling, the second information may indicate that the data transmission indicated by the first information is valid, in other words, the first information indicates valid data transmission. When the first information is higher layer signaling and the second information is DCI, the second information indicates that the data transmission indicated by the first information is invalid, in other words, the first information indicates invalid data transmission.

In some embodiments, the second information indicates that data transmission is performed in the first transmission direction on a second time-frequency resource, the second time-frequency resource and the first time-frequency resource at least partially overlap in frequency domain, and the first time-frequency resource and the second time-frequency resource at least partially overlap in time domain. For example, when a priority of the data transmission indicated by the second information is lower than a priority of the data transmission indicated by the first information, the second information indicates that the data transmission indicated by the first information is valid, in other words, the first information indicates valid data transmission. When a priority of the data transmission indicated by the second information is higher than a priority of the data transmission indicated by the first information, the second information indicates that the data transmission indicated by the first information is invalid, in other words, the first information indicates invalid data transmission.

Optionally, when the first information is DCI and the second information is higher layer signaling, the second information may indicate that the data transmission indicated by the first information is valid, in other words, the first information indicates valid data transmission. When the first information is higher layer signaling and the second information is DCI, the second information indicates that the data transmission indicated by the first information is invalid, in other words, the first information indicates invalid data transmission.

It should be understood that the second information may indicate that a part or all of the data transmission indicated by the first information is valid. The second information may alternatively indicate that a part or all of the data transmission indicated by the first information is invalid.

In this embodiment of this application, the communication method 900 further includes the following step:
S920: When determining, based on the second information, that the first information indicates valid data transmission, the terminal device 130 performs collision resolution on the data transmission indicated by the first information and the data transmission indicated by the third information.

According to the method in this embodiment of this application, before performing the collision resolution on the data transmission in the different transmission directions indicated by the first information and the third information, the terminal device 130 first determines, based on the second information, whether the data transmission indicated by the first information is valid. In this way, the terminal device 130 compares only the valid data transmission, namely, the data transmission indicated by the first information, and the data transmission that is indicated by the third information and that collides with the transmission direction indicated by the information, so that a quantity of times of performing collision resolution can be reduced. In addition, when there is a collision between transmission directions indicated by different information, a resource waste caused by data transmission cancellation after transmission resource allocation can be avoided.

In this embodiment of this application, the third time-frequency resource indicated by the third information belongs to the first bandwidth part BWP in frequency domain, the first time-frequency resource indicated by the first information belongs to the first BWP in frequency domain, the first time-frequency resource and the third time-frequency resource at least partially overlap in time domain, and the first transmission direction indicated by the first information is opposite to the second transmission direction indicated by the third information.

It should be understood that in a TDD system of NR, a flexible symbol may be used for uplink transmission or downlink transmission, and a specific transmission direction is notified by the network device to the terminal device through scheduling by using higher layer signaling (RRC signaling or MAC CE signaling) or DCI. If the terminal device receives scheduling information twice on a same flexible symbol, and transmission directions indicated in the scheduling information are opposite, the terminal device needs to determine a final transmission direction according to a rule.

In this embodiment of this application, for an SBFD symbol configured in the TDD system, there are both an uplink sub-band and a downlink sub-band on the SBFD symbol. After the terminal device receives scheduling information twice, where transmission directions of data transmission indicated in the scheduling information are opposite, the terminal device also needs to determine a final transmission direction according to a rule, in other words, perform collision resolution on the data transmission indicated by the two pieces of information, to determine an indication of specific information that is finally used for data transmission.

Specifically, when determining, based on the second information, that the first information indicates the valid data transmission, the terminal device 130 performs the collision resolution on the first information and the third information. A collision resolution process may be performed with reference to the following solutions.
1. Both signaling 1 and signaling 2 are DCI: This is an error scenario, and is not allowed to occur.
2. Both signaling 1 and signaling 2 are higher layer signaling:
   (1) This is an error scenario, and is not allowed to occur.
   (2) The transmission direction on the time-frequency resource is indicated by using additional signaling.
   (3) A rule is preset, for example, DL/UL being prioritized, or control information being prioritized.
   (4) For data transmission with same priorities, it is preset that UL is prioritized or DL is prioritized. For data transmission with different priorities, prioritization is determined based on the priorities.
   (5) A priority is indicated, and has an effective window.
3. One time of scheduling is performed by using higher layer signaling, and one time of scheduling is performed by using DCI: The terminal device performs transmission scheduled by using the DCI, and scheduling corresponding to the higher layer signaling is invalid.

Optionally, the foregoing scenario is an SBFD system.

In some embodiments, a result of the collision resolution is to perform data transmission based on the indication of the first information.

Optionally, the first information is DCI, and the third information is higher layer signaling.

Optionally, a priority of the data transmission indicated by the first information is higher than a priority of the data transmission indicated by the third information.

Optionally, the terminal device 130 receives fourth information, and determines, based on the fourth information, to perform the data transmission based on the indication of the first information. For example, the fourth information indicates a transmission direction of an SBFD symbol or an SBFD slot. When the transmission direction indicated by the fourth information is the same as the first transmission direction, the terminal device performs the data transmission based on the indication of the first information.

Optionally, the terminal device determines, according to a preset rule, to perform the data transmission based on the indication of the first information. The preset rule includes: uplink transmission being prioritized, or downlink transmission being prioritized, or one with a higher data transmission priority in uplink transmission and downlink transmission being prioritized. For example, a preset rule for the collision resolution is uplink transmission being prioritized, and the first information indicates to perform the data transmission in an uplink transmission direction, in other words, the result of the collision resolution is to perform the data transmission based on the indication of the first information.

In some embodiments, uplink data transmission is performed in the first transmission direction, the terminal device 130 has no uplink data to be transmitted on the first time-frequency resource, and that the terminal device 130 performs the collision resolution on the first information and the third information may include any one of the following cases.

Optionally, when the data transmission indicated by the first information is performed on a plurality of physical uplink shared channel PUSCH repetitions, the performing the collision resolution on the data transmission indicated by the first information and the data transmission indicated by the third information includes: performing the collision resolution on the first n PUSCH repetitions in the plurality of PUSCH repetitions and the third time-frequency resource, where n is a positive integer. For example, n is a value preset in a protocol, or n is a value preconfigured by the network device for the terminal device. For example, n is 1.

Optionally, the plurality of PUSCH repetitions are of a PUSCH repetition type A, or the plurality of PUSCH repetitions are of a PUSCH repetition type B.

Optionally, the plurality of PUSCH repetitions are consecutive in time domain, or the plurality of PUSCH repetitions are inconsecutive in time domain.

It should be understood that, based on the foregoing descriptions of the PUSCH repetition transmission and the PUSCH uplink transmission skip, when having no uplink data to be transmitted on the first time-frequency resource, the terminal device 130 performs the PUSCH uplink transmission skip. The collision resolution is performed on the first n PUSCH repetitions in the plurality of PUSCH repetitions and the third time-frequency resource. For example, when n is 1, to be specific, the collision resolution is performed on a 1^{st} PUSCH repetition in the plurality of PUSCH repetitions and the third time-frequency resource, if determining that the terminal device can perform data transmission based on the indication of the first information, when receiving the 1^{st} PUSCH repetition in the plurality of PUSCH repetitions, the network device may determine, through power detection, whether the terminal device 130 has sent the 1^{st} PUSCH repetition, in other words, whether the terminal device 130 has entered a PUSCH uplink transmission skip process. Because the terminal device 130 has no uplink data to be transmitted on the first time-frequency resource, after determining that the terminal device 130 has performed the PUSCH uplink transmission skip, the network device may no longer detect a 2^{nd} PUSCH repetition and a subsequent PUSCH repetition.

Optionally, invalid data transmission is performed on a PUSCH repetition after the first n PUSCH repetitions. It should be understood that, when the invalid data transmission is performed on the PUSCH repetition after the first n PUSCH repetitions, the collision resolution is not performed on the PUSCH repetition after the first n PUSCH repetitions.

For example, for the PUSCH repetition type B, a plurality of PUSCH repetitions of the PUSCH repetition type B are consecutive in time domain. In this case, when a 2^{nd} PUSCH repetition transmitted by the terminal device 130 arrives, the network device may not have time to determine whether the terminal device 130 has performed the PUSCH uplink transmission skip. Therefore, when n is greater than 1, for example, n = 2, after determining whether the terminal device 130 has performed the PUSCH uplink transmission skip, the network device may determine, based on a data transmission status of the terminal device 130, whether to perform a process like data receiving or the power detection on the PUSCH repetition after the first n PUSCH repetitions.

Optionally, the performing the collision resolution on the data transmission indicated by the first information and the data transmission indicated by the third information includes: performing the collision resolution on a 1^{st} PUSCH repetition in the plurality of PUSCH repetitions, all PUSCH repetitions in time T, and the third time-frequency resource, where the time T is a period of time starting from a last symbol of the 1^{st} PUSCH repetition in the plurality of PUSCH repetitions, a unit of the time T is a symbol or a slot, and the time T is predefined in a protocol or preconfigured by a base station.

For example, the time T is two slots. In other words, the collision resolution is performed on the 1^{st} PUSCH repetition in the plurality of PUSCH repetitions and all PUSCH repetitions in two slots after the last symbol of the 1^{st} PUSCH repetition and the third time-frequency resource. A unit of the time T is a symbol or a slot, and the time T is predefined in a protocol or preconfigured by the network device.

Optionally, invalid data transmission is performed on a PUSCH repetition after the time T. To be specific, because the terminal device 130 has no uplink data to be transmitted on the first time-frequency resource, the collision resolution is no longer performed on the PUSCH repetition after the time T. A purpose of performing the collision resolution on the 1^{st} PUSCH repetition in the plurality of PUSCH repetitions and all the PUSCH repetitions in the time T is as follows: When the result of the collision resolution is to perform the data transmission based on the indication of the first information, a network device side can determine, through the power detection, whether the terminal device has performed the uplink data transmission.

In some embodiments, the plurality of PUSCH repetitions are a plurality of configured grant CG-based PUSCH repetitions. The plurality of configured grant CG-based PUSCH repetitions are also referred to as a plurality of PUSCH transmission occasions.

In some embodiments, a first parameter corresponding to the data transmission indicated by the first information is configured as off, and the first parameter indicates to perform initial transmission starting from a redundancy version RV0. In this embodiment of this application, the first parameter is StartingfromRV0.

Optionally, a first parameter corresponding to the data transmission indicated by the first information is configured as on, and the first parameter indicates to perform initial transmission starting from a redundancy version RV0. A method for configuring the first parameter may alternatively be, for example, using "off" or "on", or another preset value like "1" or "0". This is not uniquely limited herein.

It should be understood that the terminal device 130 may determine, based on the first parameter (StartingfromRV0), a transmission occasion on which initial transmission can be performed in a data transmission process. When the first parameter is configured as off (off), initial transmission of one transport block is performed only on a 1^{st} transmission occasion in K repetition transmission occasions. When the first parameter is configured as on, initial transmission of one transport block may be performed on:
(1) if an RV sequence is configured as {0, 2, 3, 1}, the 1^{st} transmission occasion in the K repetition transmission occasions;
(2) if an RV sequence is configured as {0, 3, 0, 3}, any transmission occasion associated with RV = 0 in the K repetition transmission occasions; or
(3) if an RV sequence is configured as {0, 0, 0, 0}, any transmission occasion in the K repetition transmission occasions, except a last transmission occasion when K is greater than or equal to 8.

In this embodiment of this application, the plurality of PUSCH repetitions are a plurality of configured grant CG-based PUSCH repetitions. When the first parameter corresponding to the data transmission indicated by the first information is configured as off, the collision resolution may be performed on the first information and the third information with reference to the foregoing collision resolution method for the plurality of PUSCH repetitions.

In some embodiments, when the data transmission indicated by the first information is performed on a plurality of configured grant CG-based PUSCH repetitions, uplink data transmission is performed in the first transmission direction, and the terminal device has no uplink data to be transmitted on the first time-frequency resource, if a first parameter corresponding to the data transmission indicated by the first information is configured as on, and the first parameter indicates to perform initial transmission starting from a redundancy version RV0, the performing the collision resolution on the data transmission indicated by the first information and the data transmission indicated by the third information includes: performing, based on an RV sequence, the collision resolution on a PUSCH repetition on which initial data transmission can be performed in the plurality of configured grant CG-based PUSCH repetitions and the third time-frequency resource.

For example, if the RV sequence is configured as {0, 3, 0, 3}, as shown in FIG. 4, where FIG. 4 is a diagram of repetition transmission when an RV sequence is {0, 3, 0, 3}, initial transmission of a transport block may start on any transmission occasion associated with RV = 0 in K repetitions. When K = 4, the initial transmission of the transport block may start on a 1^{st} transmission occasion and a 3^{rd} transmission occasion, where the 1^{st} transmission occasion and the 3^{rd} transmission occasion are PUSCH repetitions on which the initial data transmission can be performed in the plurality of configured grant CG-based PUSCH repetitions. Therefore, the performing the collision resolution on the data transmission indicated by the first information and the data transmission indicated by the third information includes: performing, based on the RV sequence, the collision resolution on the 1^{st} transmission occasion in the plurality of configured grant CG-based PUSCH repetitions and the third time-frequency resource, and performing the collision resolution on a 3^{rd} transmission occasion and the third time-frequency resource.

In some embodiments, when the terminal device does not perform data transmission on the PUSCH repetition on which the initial data transmission can be performed in the first time-frequency resource, invalid data transmission is performed on a PUSCH repetition on which initial data transmission cannot be performed in the plurality of configured grant CG-based PUSCH repetitions and that is after the PUSCH repetition on which the initial data transmission can be performed.

Optionally, when data transmission can be performed at a repetition transmission location of the initial transmission, but there is no uplink data to be transmitted, in other words, the PUSCH uplink transmission skip is performed at the repetition transmission location of the initial transmission, the collision resolution is not performed at a location after the location of the initial transmission until a next location of the initial transmission. For example, if the RV sequence is configured as {0, 3, 0, 3}, as shown in FIG. 4, when K = 4, the initial transmission of the transport block can be performed on the 1^{st} transmission occasion and the 3^{rd} transmission occasion. The 1^{st} transmission occasion and the 3^{rd} transmission occasion are PUSCH repetitions on which initial data transmission can be performed in the plurality of configured grant CG-based PUSCH repetitions, and PUSCH repetitions on which initial data transmission cannot be performed are the 2^{nd} transmission occasion and a 4^{th} transmission occasion. Therefore, when data transmission is not performed on the 1^{st} PUSCH repetition on which initial data transmission can be performed, invalid data transmission is performed on the 2^{nd} transmission occasion after the 1^{st} transmission occasion, in other words, the collision resolution is not performed on the 2^{nd} transmission occasion.

In some embodiments, when the terminal device performs data transmission on the PUSCH repetition on which the initial data transmission can be performed in the first time-frequency resource, the performing the collision resolution on the data transmission indicated by the first information and the data transmission indicated by the third information includes: performing the collision resolution on a PUSCH repetition on which initial data transmission cannot be performed in the plurality of configured grant CG-based PUSCH repetitions and that is after the PUSCH repetition on which the initial data transmission can be performed and the data transmission indicated by the third information.

Optionally, when the data transmission can be performed and has been performed at a repetition transmission location of the initial transmission, the collision resolution continues to be performed at a next repetition transmission location of the initial transmission, until a next location of the initial transmission of the location of the initial transmission.

For example, if the RV sequence is configured as {0, 3, 0, 3}, as shown in FIG. 4, when K = 4, if data transmission is performed on a 1^{st} PUSCH repetition on which initial data transmission can be performed, in other words, data transmission is performed on the 1^{st} transmission occasion, the collision resolution is performed on a PUSCH repetition on which initial data transmission cannot be performed and that is after the PUSCH repetition, namely, the 2^{nd} transmission occasion, and the third time-frequency resource. In other words, valid data transmission is performed on a PUSCH repetition on which initial data transmission cannot be performed in the plurality of configured grant CG-based PUSCH repetitions and that is after the PUSCH repetition on which the initial data transmission can be performed.

In this embodiment of this application, optionally, when the data transmission indicated by the first information is performed on a plurality of physical uplink shared channel PUSCH repetitions, the first information further includes: configuration information of PUSCH repetition transmission.

Optionally, the PUSCH repetition transmission may be nominal repetition transmission, or may be actual repetition transmission.

Optionally, whether to perform the PUSCH repetition transmission is configured by the network device.

In this embodiment of this application, RVs are sequentially obtained from the RV sequence in a cycling (cycling) manner. A next RV is obtained from the RV sequence provided that an RV used for a previous time of PUSCH repetition transmission is known. The RV sequence may be configured by using RRC, agreed in a protocol, or dynamically indicated.

In some embodiments, the communication method 900 further includes the following steps:
S930: Determine, based on the result of the collision resolution on the data transmission indicated by the first information and the data transmission indicated by the third information, to perform the data transmission based on the indication of the first information.
S940: Perform the data transmission in the first transmission direction on the first time-frequency resource based on the indication of the first information.

FIG. 10 is a flowchart of a communication method 1000 according to an embodiment of this application. A method procedure in FIG. 10 may be performed by a network device or a chip system included in the network device. The network device may be a core network device 110 or a radio access network device 120; or may be performed by a unit and/or a component (for example, a chip or an integrated circuit) that is installed in the network device and that has a corresponding function. This is not limited in this embodiment of this application. In some embodiments, the communication method 1000 in this embodiment of this application may be applied to an SBFD system.

The following uses the network device as an example for description. The network device may be the radio access network device 120 shown in FIG. 1. It should be understood that steps of the communication method shown in FIG. 10 are basically the same as the steps performed by the terminal device 130. The following describes a difference between the method of the network device and the method of the terminal device. As shown in FIG. 10, the communication method 1000 includes the following steps:

S1010: The network device determines first information, second information, and third information, where the first information indicates to perform data transmission in a first transmission direction on a first time-frequency resource, the second information indicates whether the data transmission indicated by the first information is valid, the third information indicates to perform data transmission in a second transmission direction on a third time-frequency resource, the third time-frequency resource belongs to a first bandwidth part BWP in frequency domain, the first time-frequency resource belongs to the first BWP in frequency domain, the first time-frequency resource and the third time-frequency resource at least partially overlap in time domain, and the first transmission direction is opposite to the second transmission direction.

S1020: When determining, based on the second information, that the first information indicates valid data transmission, the network device performs collision resolution on the data transmission indicated by the first information and the data transmission indicated by the third information.

S1030: The network device sends the first information, the second information, and the third information.

In some embodiments, when uplink data transmission is performed in the first transmission direction and a result of the collision resolution is to perform data transmission based on the indication of the first information, the network device performs power detection on the first time-frequency resource indicated by the first information, where the power detection is used to determine whether the terminal device has performed data transmission.

It should be understood that, based on the foregoing descriptions of PUSCH uplink transmission skip, when having no uplink data to be transmitted on the first time-frequency resource, the terminal device 130 performs the PUSCH uplink transmission skip. Therefore, the network device may determine, by determining whether the terminal device has performed a PUSCH uplink transmission skip process, whether to continue to receive data on the first time-frequency resource. In this embodiment of this application, whether the terminal device has performed the data transmission on the first time-frequency resource may be determined through the power detection.

Optionally, the data transmission indicated by the first information is performed on a plurality of physical uplink shared channel PUSCH repetitions.

In some embodiments, the network device performs the power detection on the first n PUSCH repetitions in the plurality of PUSCH repetitions, where n is a positive integer.

For example, when n is 1, the power detection is performed on a 1^{st} PUSCH repetition in the plurality of PUSCH repetitions. In this case, if data transmission power is detected on the 1^{st} PUSCH repetition, the network device may determine that the terminal device 130 has performed the data transmission, in other words, the terminal device 130 has not entered the PUSCH uplink transmission skip process. If no data transmission power is detected on the 1^{st} PUSCH repetition, the network device may determine that the terminal device 130 has not performed the data transmission, and may not detect a 2^{nd} PUSCH repetition and subsequent PUSCH repetitions.

Optionally, when the network device determines that data transmission is not performed on at least one of the first n PUSCH repetitions in the plurality of PUSCH repetitions, the network device stops the power detection on a PUSCH repetition after the first n PUSCH repetitions. It should be understood that, when determining that there is no uplink data to be transmitted on the first n PUSCH repetitions, the network device does not perform the power detection on the PUSCH repetition after the first n PUSCH repetitions.

In some embodiments, the data transmission indicated by the first information is performed on a plurality of PUSCH repetitions. The network device performs the power detection on a 1^{st} PUSCH repetition in the plurality of PUSCH repetitions and all PUSCH repetitions in time T. The time T is a period of time starting from a last symbol of the 1^{st} PUSCH repetition in the plurality of PUSCH repetitions, and the time T is predefined in a protocol or preconfigured by the network device. A unit of the time T is a symbol or a slot.

For example, the time T is two slots. In other words, the power detection is performed on the 1^{st} PUSCH repetition in the plurality of PUSCH repetitions and all PUSCH repetitions in two slots after the last symbol of the 1^{st} PUSCH repetition. In this way, the network device may determine whether the terminal device 130 has performed the data transmission on the time-frequency resource. The time T is predefined in a protocol or preconfigured by the network device.

Optionally, when the network device determines that data transmission is not performed on the 1^{st} PUSCH repetition or at least one of all the PUSCH repetitions in the time T, the network device stops the power detection on a PUSCH repetition after the time T. It should be understood that, when determining that there is no uplink data to be transmitted on the PUSCH repetition, the network device may no longer perform the power detection on the PUSCH repetition after the time T.

Optionally, the plurality of PUSCH repetitions are consecutive in time domain, or the plurality of PUSCH repetitions are inconsecutive in time domain. For example, when the plurality of PUSCH repetitions are consecutive in time domain, because the network device may not have time to learn, when the 2^{nd} PUSCH repetition arrives, whether the terminal device has performed the PUSCH uplink transmission skip, n may be selected as a positive integer greater than 1. When the plurality of PUSCH repetitions are inconsecutive in time domain, to reduce a quantity of times of power detection, n may be selected as 1. In other words, the network device performs the power detection on the 1^{st} PUSCH repetition in the plurality of PUSCH repetitions.

Optionally, the plurality of PUSCH repetitions are of a PUSCH repetition type A, or the plurality of PUSCH repetitions are of a PUSCH repetition type B.

In some embodiments, the data transmission indicated by the first information is performed on a plurality of configured grant CG-based PUSCH repetitions.

Optionally, a first parameter corresponding to the data transmission indicated by the first information is configured as off, and the first parameter indicates to perform initial transmission starting from a redundancy version RV0.

In the foregoing embodiments, when the first parameter corresponding to the data transmission indicated by the first information is configured as off, whether the terminal device has performed the data transmission on the first time-frequency resource may be determined with reference to the foregoing power detection method for the plurality of PUSCH repetitions.

Optionally, a first parameter corresponding to the data transmission indicated by the first information is configured as on.

The network device performs, based on an RV sequence, the power detection on a PUSCH repetition on which initial data transmission can be performed in the plurality of configured grant CG-based PUSCH repetitions.

It should be understood that, based on different RV sequences and parameters, a quantity of PUSCH repetitions on which initial data transmission can be performed in the plurality of configured grant CG-based PUSCH repetitions also changes accordingly. For example, if the RV sequence is configured as {0, 3, 0, 3}, as shown in FIG. 4, where FIG. 4 is a diagram of repetition transmission when an RV sequence is {0, 3, 0, 3}, initial transmission of a transport block may start on any transmission occasion associated with RV = 0 in K repetitions. When K = 4, the initial transmission of the transport block may start on a 1^{st} transmission occasion and a 3^{rd} transmission occasion, where the 1^{st} transmission occasion and the 3^{rd} transmission occasion are PUSCH repetitions on which the initial data transmission can be performed in the plurality of configured grant CG-based PUSCH repetitions, and are also referred to as PUSCH transmission occasions. Therefore, the network device may perform, based on the RV sequence, the power detection on the PUSCH repetition on which the initial data transmission can be performed in the plurality of configured grant CG-based PUSCH repetitions.

Optionally, when the data transmission can be performed and has been performed at a repetition transmission location of the initial transmission, the power detection continues to be performed at a next repetition transmission location of the initial transmission, to determine whether to transmit data, until a next location at which the initial transmission can be performed and that is of the location of the initial transmission.

In some embodiments, the network device determines that the data transmission is not performed on the PUSCH repetition on which the initial data transmission can be performed in the plurality of configured grant CG-based PUSCH repetitions. The network device stops the power detection on a PUSCH repetition on which initial data transmission cannot be performed in the plurality of configured grant CG-based PUSCH repetitions and that is after the PUSCH repetition on which the initial data transmission can be performed.

Optionally, when the data transmission can be performed at the repetition transmission location of the initial transmission, but it is determined, through the power detection, that there is no uplink data to be transmitted, in other words, the PUSCH uplink transmission skip is performed at the repetition transmission location of the initial transmission, the power detection is not performed at a location after the location of the initial transmission until a next location of the initial transmission.

Optionally, the network device stops the power detection on a PUSCH repetition on which initial data transmission cannot be performed in the plurality of configured grant CG-based PUSCH repetitions.

In some embodiments, the network device determines, through the power detection, that the data transmission is performed on the PUSCH repetition on which the initial data transmission can be performed in the plurality of configured grant CG-based PUSCH repetitions. In this case, the performing the power detection on the first time-frequency resource indicated by the first information includes: The network device performs the power detection on a PUSCH repetition on which initial data transmission cannot be performed in the plurality of configured grant CG-based PUSCH repetitions and that is after the PUSCH repetition on which the initial data transmission can be performed.

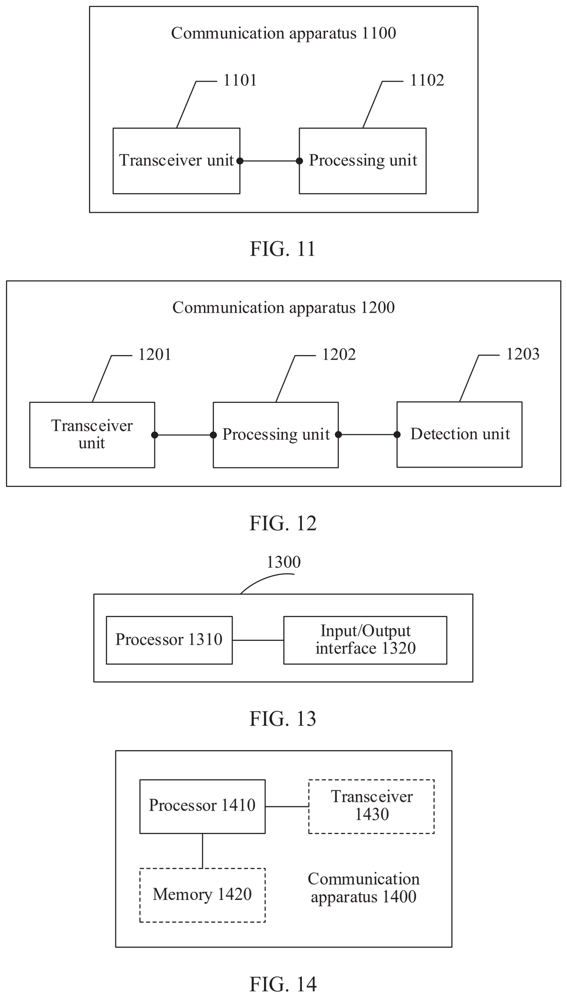

FIG. 11 is a block diagram of a structure of a communication apparatus 1100 according to an embodiment of this application. Refer to FIG. 11. The communication apparatus 1100 may be configured to perform a process performed by the terminal device 130 in the embodiment shown in FIG. 9. For details, refer to related descriptions in the foregoing method embodiment.

The communication apparatus 1100 includes a processing unit 1101 and a transceiver unit 1102. The transceiver unit 1102 may implement a corresponding communication function, and the processing unit 1101 is configured to process data. The transceiver unit 1102 may also be referred to as a communication interface or a communication unit.

Optionally, the communication apparatus 1100 may further include a storage unit. The storage unit may be configured to store instructions and/or data. The processing unit 1101 may read the instructions and/or the data in the storage unit, so that the communication apparatus implements the foregoing method embodiment.

The communication apparatus 1100 may be configured to perform an action performed by the terminal device in the foregoing method embodiment. The communication apparatus 1100 may be a terminal device or a component that can be configured in the terminal device. The processing unit 1101 is configured to perform a processing-related operation on a terminal device side in the foregoing method embodiment. Optionally, the transceiver unit 1102 is configured to perform a receiving-related operation on the terminal device side in the foregoing method embodiment.

Optionally, the transceiver unit 1102 may include a sending unit and a receiving unit. The sending unit is configured to perform a sending operation in the foregoing method embodiment. The receiving unit is configured to perform a receiving operation in the foregoing method embodiment.

It should be noted that the communication apparatus 1100 may include the receiving unit, but does not include the sending unit. This may be specifically determined depending on whether the foregoing solutions performed by the communication apparatus 1100 include a sending action and a receiving action.

The transceiver unit 1102 is configured to receive first information, second information, and third information, where the first information indicates to perform data transmission in a first transmission direction on a first time-frequency resource, the second information indicates whether the data transmission indicated by the first information is valid, the third information indicates to perform data transmission in a second transmission direction on a third time-frequency resource, the third time-frequency resource belongs to a first bandwidth part BWP in frequency domain, the first time-frequency resource belongs to the first BWP in frequency domain, the first time-frequency resource and the third time-frequency resource at least partially overlap in time domain, and the first transmission direction is opposite to the second transmission direction.

The processing unit 1101 is configured to: when determining, based on the second information, that the first information indicates valid data transmission, perform collision resolution on the data transmission indicated by the first information and the data transmission indicated by the third information.

In another possible implementation, the transceiver unit 1102 is further configured to receive fourth information, and the processing unit 1101 is further configured to determine, based on the fourth information, to perform data transmission based on the indication of the first information.

In another possible implementation, the processing unit 1101 is further configured to determine, according to a preset rule, to perform data transmission based on the indication of the first information, where the preset rule includes: uplink transmission being prioritized, or downlink transmission being prioritized, or one with a higher data transmission priority in uplink transmission and downlink transmission being prioritized.

It should be understood that a specific process in which the units perform the foregoing corresponding processes has been described in detail in the foregoing method embodiment. For brevity, details are not described herein again.

The processing unit 1101 in the foregoing embodiment may be implemented by at least one processor or processor-related circuit. The transceiver unit 1102 may be implemented by a transceiver or a transceiver-related circuit. The transceiver unit 1102 may also be referred to as a communication unit or a communication interface. The storage unit may be implemented by at least one memory.

FIG. 12 is a block diagram of a structure of a communication apparatus 1200 according to an embodiment of this application. Refer to FIG. 12. The communication apparatus 1200 may be configured to perform a process performed by the network device in the embodiment shown in FIG. 10. For details, refer to related descriptions in the foregoing method embodiment.

The communication apparatus 1200 includes a transceiver unit 1201, a processing unit 1202, and a detection unit 1203. The transceiver unit 1201 may implement a corresponding communication function, the processing unit 1202 is configured to perform data processing, and the detection unit 1203 is configured to perform power detection. The transceiver unit 1201 may also be referred to as a communication interface or a communication unit.

Optionally, the communication apparatus 1200 may further include a storage unit. The storage unit may be configured to store instructions and/or data. The processing unit 1202 may read the instructions and/or the data in the storage unit, so that the communication apparatus 1200 implements the foregoing method embodiment.

The communication apparatus 1200 may be configured to perform an action performed by the network device in the foregoing method embodiment. The communication apparatus 1200 may be a network device or a component that can be configured in the network device. The transceiver unit 1201 is configured to perform a sending-related operation on a network device side in the foregoing method embodiment. The processing unit 1202 is configured to perform a processing-related operation on the network device side in the foregoing method embodiment. The detection unit 1203 is configured to perform a detection-related operation on the network device side in the foregoing method embodiment.

Optionally, the transceiver unit 1201 may include a sending unit and a receiving unit. The sending unit is configured to perform a sending operation in the foregoing method embodiment. The receiving unit is configured to perform a receiving operation in the foregoing method embodiment.

It should be noted that the communication apparatus 1200 may include a sending unit, but does not include a receiving unit. This may be specifically determined depending on whether the foregoing solutions performed by the communication apparatus 1200 include a sending action and a receiving action.

The processing unit 1202 is configured to determine first information, second information, and third information, where the first information indicates to perform data transmission in a first transmission direction on a first time-frequency resource, the second information indicates whether the data transmission indicated by the first information is valid, the third information indicates to perform data transmission in a second transmission direction on a third time-frequency resource, the third time-frequency resource belongs to a first bandwidth part BWP in frequency domain, the first time-frequency resource belongs to the first BWP in frequency domain, the first time-frequency resource and the third time-frequency resource at least partially overlap in time domain, and the first transmission direction is opposite to the second transmission direction.

The processing unit 1202 is further configured to: when determining, based on the second information, that the first information indicates valid data transmission, perform collision resolution on the data transmission indicated by the first information and the data transmission indicated by the third information.

The transceiver unit 1201 is configured to send the first information, the second information, and the third information.

In some embodiments, the detection unit is configured to perform power detection on the first time-frequency resource indicated by the first information, where the power detection is used to determine whether a terminal device has performed data transmission.

In another possible implementation, the transceiver unit 1201 is further configured to send fourth information to the terminal device 130, and the processing unit 1202 is further configured to determine, based on the fourth information, to perform data transmission based on the indication of the first information.

In another possible implementation, the processing unit 1202 is further configured to determine, according to a preset rule, to perform data transmission based on the indication of the first information, where the preset rule includes: uplink transmission being prioritized, or downlink transmission being prioritized, or one with a higher data transmission priority in uplink transmission and downlink transmission being prioritized.

It should be understood that a specific process in which the units perform the foregoing corresponding processes has been described in detail in the foregoing method embodiment. For brevity, details are not described herein again.

The processing unit 1202 in the foregoing embodiment may be implemented by at least one processor or processor-related circuit. The transceiver unit 1201 may be implemented by a transceiver or a transceiver-related circuit. The detection unit 1203 may be implemented by a detector or a detector-related circuit. The transceiver unit 1201 may also be referred to as a communication unit or a communication interface. The storage unit may be implemented by at least one memory.

FIG. 13 is a block diagram of a structure of a communication apparatus 1300 according to an embodiment of this application. The communication apparatus 1300 may be configured to implement functions of the network device and the terminal device 130 in the foregoing method. The communication apparatus 1300 may be a chip in the network device or the terminal device 130.

The communication apparatus 1300 includes an input/output interface 1320 and a processor 1310. The input/output interface 1320 may be an input/output circuit. The processor 1310 may be a signal processor, a chip, or another integrated circuit that can implement the method in this application. The input/output interface 1320 is configured to input or output a signal or data.

For example, when the communication apparatus 1300 is the terminal device 130, the input/output interface 1320 is configured to receive first information sent by the network device, where the first information indicates the terminal device 130 to perform data transmission in a first transmission direction on a first time-frequency resource.

For example, when the communication apparatus 1300 is the network device, the input/output interface 1320 is configured to send first information to the terminal device 130, where the first information indicates the terminal device 130 to perform data transmission in a first transmission direction on a first time-frequency resource. The processor 1310 is configured to perform a part or all of steps of any method provided in this application.

In a possible implementation, the processor 1310 executes instructions stored in a memory, to implement the function implemented by the network device or the terminal device 130.

Optionally, the communication apparatus 1300 further includes the memory.

Optionally, the processor and the memory are integrated together.

In a possible implementation, the processor 1310 may be a logic circuit, and the processor 1310 inputs/outputs a message or signaling through the input/output interface 1320. The logic circuit may be a signal processor, a chip, or another integrated circuit that can implement the method in embodiments of this application.

The foregoing descriptions of the apparatus in FIG. 13 are merely an example for description. The apparatus can be configured to perform the method in the foregoing embodiment. For specific content, refer to descriptions in the foregoing method embodiment. Details are not described herein again.

FIG. 14 is a block diagram of a structure of a communication apparatus 1400 according to an embodiment of this application. The communication apparatus 1400 includes a processor 1410. The processor 1410 is coupled to a memory 1420. The memory 1420 is configured to store a computer program or instructions and/or data. The processor 1410 is configured to execute the computer program or the instructions and/or the data stored in the memory 1420, to perform the method in the foregoing method embodiment.

Optionally, the communication apparatus 1400 includes one or more processors 1410.

Optionally, as shown in FIG. 14, the communication apparatus 1400 may further include the memory 1420.

Optionally, the communication apparatus 1400 may include one or more memories 1420.

Optionally, the memory 1420 and the processor 1410 may be integrated together, or separately disposed.

Optionally, as shown in FIG. 14, the communication apparatus 1400 may further include a transceiver 1430. The transceiver 1430 is configured to receive and/or send a signal. For example, the processor 1410 is configured to control the transceiver 1430 to receive and/or send the signal.

In a solution, the communication apparatus 1400 is configured to implement an operation performed by the network device, the terminal device, or the communication device in the foregoing method embodiment.

For example, the processor 1410 is configured to implement a processing-related operation performed by the network device, the terminal device, or the communication device in the foregoing method embodiment, and the transceiver 1430 is configured to implement receiving and sending-related operations performed by the network device, the terminal device, or the communication device in the foregoing method embodiment.

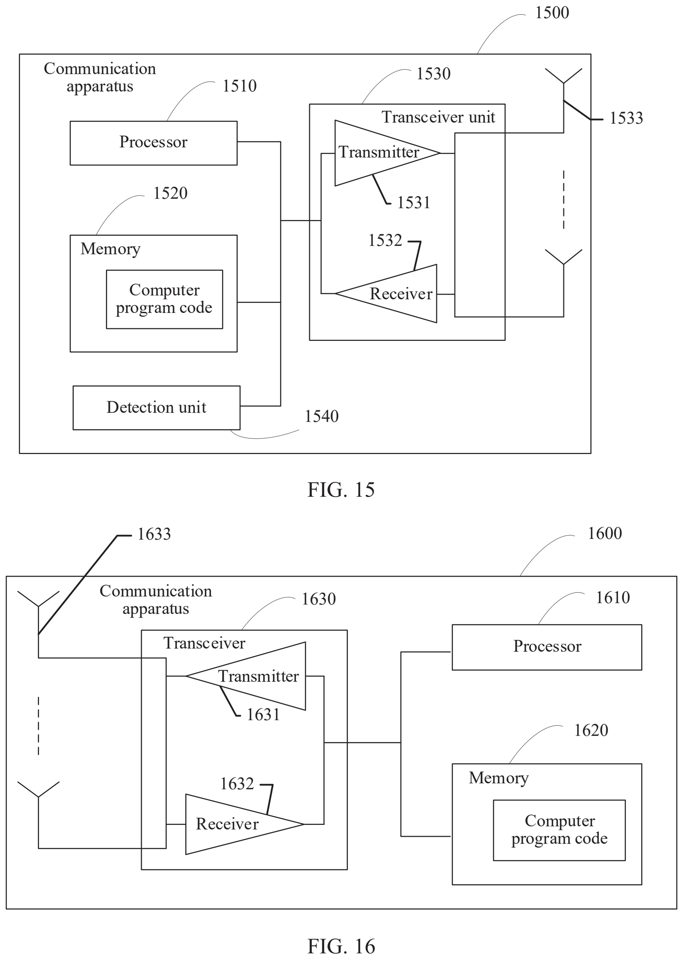

FIG. 15 is a block diagram of a communication apparatus 1500 according to an embodiment of this application. The communication apparatus 1500 may be a network device or a chip. The communication apparatus 1500 may be configured to perform an operation performed by the network device in the method embodiment shown in FIG. 10.

When the communication apparatus 1500 is a network device, for example, a base station, FIG. 15 is a diagram of a simplified structure of the base station. The base station includes a part 1510, a part 1520, a part 1530, and a part 1540. The part 1510 is mainly configured to: perform baseband processing, control the base station, and the like. The part 1510 is usually a control center of the base station, may be usually referred to as a processor, and is configured to control the base station to perform a processing operation on a network device side in the foregoing method embodiment. The part 1520 is mainly configured to store computer program code and data. The part 1530 is mainly configured to receive and send a radio frequency signal, and perform conversion between the radio frequency signal and a baseband signal. The part 1530 may be usually referred to as a transceiver unit, a transceiver machine, a transceiver circuit, a transceiver, or the like. A transceiver unit in the part 1530 may also be referred to as a transceiver machine, a transceiver, or the like, and includes an antenna 1533 and a radio frequency circuit (not shown in the figure). The radio frequency circuit is mainly configured to perform radio frequency processing. Optionally, a component that is configured to implement a receiving function and that is in the part 1530 may be considered as a receiver, and a component that is configured to implement a sending function and that is in the part 1530 may be considered as a transmitter. That is, the part 1530 includes a receiver 1532 and a transmitter 1531. The receiver may also be referred to as a receiving unit, a receiver machine, a receiving circuit, or the like, and the transmitter may be referred to as a transmitting unit, a transmitter machine, a transmitting circuit, or the like. The part 1540 is mainly used for power detection of a radio frequency signal, and the part 1540 may be usually referred to as a detection unit, a detector, or the like.

The part 1510 and the part 1520 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver unit in the part 1530 is configured to perform a receiving and sending-related process performed by the network device in the embodiment shown in FIG. 10. The processor in the part 1510 is configured to perform a processing-related process performed by the network device in the embodiment shown in FIG. 10.

In another implementation, the processor in the part 1510 is configured to perform a processing-related process performed by the communication device in the embodiment shown in FIG. 10.

In another implementation, the transceiver unit in the part 1530 is configured to perform a receiving and sending-related process performed by the communication device in the embodiment shown in FIG. 10.

In another implementation, the detection unit in the part 1540 is configured to perform a power detection-related process performed by the communication device in the embodiment shown in FIG. 10.

It should be understood that FIG. 15 is merely an example rather than a limitation. The network device including the processor, the memory, and the transceiver may not depend on the structures shown in FIG. 11 to FIG. 14.

When the communication apparatus 1500 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiment may be understood as an output of the chip, and a receiving operation performed by the network device in the foregoing method embodiment may be understood as an input of the chip.

FIG. 16 is a block diagram of a communication apparatus 1600 according to an embodiment of this application. The communication apparatus 1600 may be a terminal device 130, or a processor or a chip of the terminal device 130. The communication apparatus 1600 may be configured to perform an operation performed by the terminal device 130 in the foregoing method embodiment.

When the communication apparatus 1600 is the terminal device 130, FIG. 16 is a diagram of a simplified structure of the terminal device 130. As shown in FIG. 16, the terminal device 130 includes a processor, a memory, and a transceiver. The memory may store computer program code. The transceiver includes a transmitter 1631, a receiver 1632, a radio frequency circuit (not shown in the figure), an antenna 1633, and an input/output apparatus (not shown in the figure).

The processor is mainly configured to: process a communication protocol and communication data, control the terminal device 130, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When needing to send data, after performing baseband processing on the to-be-sent data, the processor outputs a baseband signal to the radio frequency circuit. The radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 16 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a transceiver function may be considered as a transceiver unit of the terminal device, and the processor that has a processing function may be considered as a processing unit of the terminal device.

As shown in FIG. 16, the terminal device may include a processor 1610, a memory 1620, and a transceiver 1630. The processor 1610 may also be referred to as a processing unit, a processing board, a processing unit, a processing apparatus, or the like. The transceiver 1630 may also be referred to as a transceiver unit, a transceiver machine, a transceiver apparatus, or the like.

Optionally, a component configured to implement a receiving function in the transceiver 1630 may be considered as a receiving unit, and a component configured to implement a sending function in the transceiver 1630 may be considered as a sending unit. That is, the transceiver 1630 includes a receiver machine and a transmitter machine. The transceiver sometimes may also be referred to as a transceiver machine, a transceiver unit, a transceiver circuit, or the like. The receiver machine sometimes may also be referred to as a receiver, a receiving unit, a receiving circuit, or the like. The transmitter machine sometimes may also be referred to as a transmitter, a transmitting unit, a transmitting circuit, or the like.

For example, in an implementation, the processor 1610 is configured to perform a processing action on a terminal device 130 side in the embodiment shown in FIG. 9, and the transceiver 1630 is configured to perform receiving and sending actions on the terminal device 130 side in FIG. 9.

For example, in an implementation, the processor 1610 is configured to perform a processing action on a terminal device 130 side in the embodiment shown in FIG. 9, and the transceiver 1630 is configured to perform receiving and sending actions on the terminal device 130 side in FIG. 9.

It should be understood that FIG. 16 is merely an example rather than a limitation. The terminal device including the transceiver unit and the processing unit may not depend on the structures shown in FIG. 11 to FIG. 14.

When the communication apparatus 1600 is a chip, the chip includes a processor, a memory, and a transceiver. The transceiver may be an input/output circuit or a communication interface. The processor may be a processing unit, a microprocessor, or an integrated circuit integrated on the chip. A sending operation performed by the terminal device in the foregoing method embodiment may be understood as an output of the chip, and a receiving operation performed by the terminal device in the foregoing method embodiment may be understood as an input of the chip.

This application further provides a chip, including a processor, configured to invoke instructions from a memory and run the instructions stored in the memory, to cause a communication device on which the chip is installed to perform the method in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the method in the foregoing examples. Optionally, the chip further includes the memory. The memory is configured to store a computer program or code.

This application further provides a processor, configured to be coupled to a memory, and configured to perform a method and a function of the network device or the terminal device in any one of the foregoing embodiments.

Another embodiment of this application provides a computer program product including instructions. When the computer program product runs on a computer, the method in the foregoing embodiment is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

In the descriptions of embodiments of this application, unless otherwise specified, "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe technical solutions in embodiments of this application, words such as "first" and "second" are used in embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference. In addition, in embodiments of this application, a word like "example" or "for example" is used to represent giving an example, an illustration, or a description.

Any embodiment or design solution described as an "example" or "for example" in embodiments of this application should not be explained as being more preferred or having more advantages than another embodiment or design solution. Exactly, the word like "example" or "for example" is intended to present a related concept in a specific manner for ease of understanding.

In descriptions of embodiments of this application, unless otherwise specified, "/" indicates an "or" relationship between associated objects. For example, A/B may represent A or B. In this application, "and/or" describes only an association relationship for describing associated objects, and represents that three relationships may exist. For example, A and/or B may represent the following three cases: Only A exists, both A and B exist, and only B exists. A and B each may be in a singular or plural form.

It should be understood that "one embodiment" or "an embodiment" mentioned throughout this specification means that particular features, structures, or characteristics related to the embodiment are included in at least one embodiment of this application.

Therefore, "in one embodiment" or "in an embodiment" appearing throughout the specification does not necessarily refer to a same embodiment. In addition, these particular features, structures, or characteristics may be combined in one or more embodiments in any appropriate manner.

Sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that an "embodiment" mentioned throughout this specification means that particular features, structures, or characteristics related to the embodiment are included in at least one embodiment of this application.

Therefore, embodiments in the entire specification are not necessarily a same embodiment. In addition, these particular features, structures, or characteristics may be combined in one or more embodiments in any appropriate manner.

It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for ease and brevity of description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device or a chip system comprised in the terminal device, and comprising:
receiving first information, second information, and third information, wherein the first information indicates to perform data transmission in a first transmission direction on a first time-frequency resource, the second information indicates whether the data transmission indicated by the first information is valid, the third information indicates to perform data transmission in a second transmission direction on a third time-frequency resource, the third time-frequency resource belongs to a first bandwidth part BWP in frequency domain, the first time-frequency resource belongs to the first BWP in frequency domain, the first time-frequency resource and the third time-frequency resource at least partially overlap in time domain, and the first transmission direction is opposite to the second transmission direction; and
when determining, based on the second information, that the first information indicates valid data transmission, performing collision resolution on the data transmission indicated by the first information and the data transmission indicated by the third information.

2. The method according to claim 1, wherein when the data transmission indicated by the first information is performed on a plurality of physical uplink shared channel PUSCH repetitions, uplink data transmission is performed in the first transmission direction; and when there is no uplink data to be transmitted on the first time-frequency resource, the performing the collision resolution on the data transmission indicated by the first information and the data transmission indicated by the third information comprises:
performing the collision resolution on the first n PUSCH repetitions in the plurality of PUSCH repetitions and the third time-frequency resource, wherein n is a positive integer.

3. The method according to claim 2, wherein invalid data transmission is performed on a PUSCH repetition after the first n PUSCH repetitions.

4. The method according to claim 2, wherein the performing the collision resolution on the data transmission indicated by the first information and the data transmission indicated by the third information comprises:
performing the collision resolution on a 1^{st} PUSCH repetition in the plurality of PUSCH repetitions, all PUSCH repetitions in time T, and the third time-frequency resource, wherein the time T is a period of time starting from a last symbol of the 1^{st} PUSCH repetition in the plurality of PUSCH repetitions, and the time T is predefined in a protocol or preconfigured by a base station.

5. The method according to claim 4, wherein invalid data transmission is performed on a PUSCH repetition after the time T.

6. The method according to any one of claims 2 to 5, wherein the plurality of PUSCH repetitions are consecutive in time domain, or the plurality of PUSCH repetitions are inconsecutive in time domain.

7. The method according to any one of claims 2 to 5, wherein the plurality of PUSCH repetitions are a plurality of configured grant CG-based PUSCH repetitions, a first parameter corresponding to the data transmission indicated by the first information is configured as off, and the first parameter indicates to perform initial transmission starting from a redundancy version RV0.

8. The method according to claim 1, wherein when the data transmission indicated by the first information is performed on a plurality of configured grant CG-based PUSCH repetitions, uplink data transmission is performed in the first transmission direction, and when there is no uplink data to be transmitted on the first time-frequency resource, if a first parameter corresponding to the data transmission indicated by the first information is configured as on, and the first parameter indicates to perform initial transmission starting from a redundancy version RV0, the performing the collision resolution on the data transmission indicated by the first information and the data transmission indicated by the third information comprises:
performing, based on an RV sequence, the collision resolution on a PUSCH repetition on which initial data transmission can be performed in the plurality of configured grant CG-based PUSCH repetitions and the third time-frequency resource.

9. The method according to claim 8, wherein when data transmission is not performed on the PUSCH repetition on which the initial data transmission can be performed in the first time-frequency resource, invalid data transmission is performed on a PUSCH repetition on which initial data transmission cannot be performed in the plurality of configured grant CG-based PUSCH repetitions and that is after the PUSCH repetition on which the initial data transmission can be performed.

10. The method according to claim 8, wherein when data transmission is performed on the PUSCH repetition on which the initial data transmission can be performed in the first time-frequency resource, the performing the collision resolution on the data transmission indicated by the first information and the data transmission indicated by the third information comprises:
performing the collision resolution on a PUSCH repetition on which initial data transmission cannot be performed in the plurality of configured grant CG-based PUSCH repetitions and that is after the PUSCH repetition on which the initial data transmission can be performed and the data transmission indicated by the third information.

11. The method according to any one of claims 1 to 10, wherein when the first information and the third information are higher layer signaling, the higher layer signaling comprises radio resource control RRC signaling and medium access control-control element MAC-CE signaling, and a result of the collision resolution is to perform data transmission based on the indication of the first information, the collision resolution comprises:
receiving fourth information, and determining, based on the fourth information, to perform the data transmission based on the indication of the first information; or
determining, according to a preset rule, to perform the data transmission based on the indication of the first information, wherein the preset rule comprises: uplink transmission being prioritized, or downlink transmission being prioritized, or one with a higher data transmission priority in uplink transmission and downlink transmission being prioritized.

12. A communication method, applied to a network device or a chip system comprised in the network device, and comprising:
determining first information, second information, and third information, wherein the first information indicates to perform data transmission in a first transmission direction on a first time-frequency resource, the second information indicates whether the data transmission indicated by the first information is valid, the third information indicates to perform data transmission in a second transmission direction on a third time-frequency resource, the third time-frequency resource belongs to a first bandwidth part BWP in frequency domain, the first time-frequency resource belongs to the first BWP in frequency domain, the first time-frequency resource and the third time-frequency resource at least partially overlap in time domain, and the first transmission direction is opposite to the second transmission direction;
when determining, based on the second information, that the first information indicates valid data transmission, performing collision resolution on the data transmission indicated by the first information and the data transmission indicated by the third information; and
sending the first information, the second information, and the third information.

13. The method according to claim 12, wherein when uplink data transmission is performed in the first transmission direction and a result of the collision resolution is to perform data transmission based on the indication of the first information, power detection is performed on the first time-frequency resource indicated by the first information, wherein the power detection is used to determine whether a terminal device has performed data transmission.

14. The method according to claim 13, wherein the data transmission indicated by the first information is performed on a plurality of physical uplink shared channel PUSCH repetitions, and the performing the power detection on the first time-frequency resource indicated by the first information comprises:
performing the power detection on the first n PUSCH repetitions in the plurality of PUSCH repetitions, wherein n is a positive integer.

15. The method according to claim 14, wherein when determining that data transmission is not performed on at least one of the first n PUSCH repetitions in the plurality of PUSCH repetitions, the network device stops the power detection on a PUSCH repetition after the first n PUSCH repetitions.

16. The method according to claim 13, wherein the data transmission indicated by the first information is performed on a plurality of PUSCH repetitions, and the performing the power detection on the first time-frequency resource indicated by the first information comprises:
performing the power detection on a 1^{st} PUSCH repetition in the plurality of PUSCH repetitions and all PUSCH repetitions in time T, wherein the time T is a period of time starting from a last symbol of the 1^{st} PUSCH repetition in the plurality of PUSCH repetitions, and the time T is predefined in a protocol or preconfigured by the network device.

17. The method according to claim 16, wherein when it is determined that data transmission is not performed on the 1^{st} PUSCH repetition or at least one of all the PUSCH repetitions in the time T, the power detection is stopped on a PUSCH repetition after the time T.

18. The method according to any one of claims 14 to 17, wherein the plurality of PUSCH repetitions are consecutive in time domain, or the plurality of PUSCH repetitions are inconsecutive in time domain.

19. The method according to any one of claims 14 to 17, wherein the plurality of PUSCH repetitions are a plurality of configured grant CG-based PUSCH repetitions, a first parameter corresponding to the data transmission indicated by the first information is configured as off, and the first parameter indicates to perform initial transmission starting from a redundancy version RV0.

20. The method according to claim 13, wherein when the data transmission indicated by the first information is performed on a plurality of configured grant CG-based PUSCH repetitions, if a first parameter corresponding to the data transmission indicated by the first information is configured as on, the first parameter indicates to perform initial transmission starting from a redundancy version RV0, and the performing the power detection on the first time-frequency resource indicated by the first information comprises:
performing, based on an RV sequence, the power detection on a PUSCH repetition on which initial data transmission can be performed in the plurality of configured grant CG-based PUSCH repetitions.

21. The method according to claim 20, wherein when it is determined that data transmission is not performed on the PUSCH repetition on which the initial data transmission can be performed in the plurality of configured grant CG-based PUSCH repetitions, the power detection is stopped on a PUSCH repetition on which initial data transmission cannot be performed in the plurality of configured grant CG-based PUSCH repetitions and that is after the PUSCH repetition on which the initial data transmission can be performed.

22. The method according to claim 20, wherein when it is determined that data transmission is performed on the PUSCH repetition on which the initial data transmission can be performed in the plurality of configured grant CG-based PUSCH repetitions, the performing the power detection on the first time-frequency resource indicated by the first information comprises:
performing the power detection on a PUSCH repetition on which initial data transmission cannot be performed in the plurality of configured grant CG-based PUSCH repetitions and that is after the PUSCH repetition on which the initial data transmission can be performed.

23. The method according to any one of claims 12 to 22, wherein when the first information and the third information are higher layer signaling, the higher layer signaling comprises radio resource control RRC signaling and medium access control-control element MAC-CE signaling, and the result of the collision resolution is to perform the data transmission based on the indication of the first information, the collision resolution comprises:
sending fourth information, and determining, based on the fourth information, to perform the data transmission based on the indication of the first information; or
determining, according to a preset rule, to perform the data transmission based on the indication of the first information, wherein the preset rule comprises: uplink transmission being prioritized, or downlink transmission being prioritized, or one with a higher data transmission priority in uplink transmission and downlink transmission being prioritized.

24. A communication apparatus, comprising a processor, wherein the processor is coupled to a memory, and the processor is configured to execute a computer program or instructions, to cause the communication apparatus to perform the method according to any one of claims 1 to 23.

25. A communication apparatus, comprising a logic circuit and an input/output interface, wherein the logic circuit is configured to execute a computer program or instructions, to cause the communication apparatus to perform the method according to any one of claims 1 to 23.

26. A computer-readable storage medium, comprising a computer program or instructions, wherein when the computer program or the instructions are run on a computer, the computer is caused to perform the method according to any one of claims 1 to 23.

27. A computer program product, comprising instructions, wherein when the instructions are run on a computer, the computer is caused to perform the method according to any one of claims 1 to 23.
